(19) Europäisches Patentamt / European Patent Office / Office européen des brevets

(11) **EP 4 700 717 A1**

(12) **EUROPEAN PATENT APPLICATION**

(43) Date of publication:
25.02.2026 Bulletin 2026/09

(21) Application number: 25197145.3

(22) Date of filing: 20.08.2025

(51) International Patent Classification (IPC):
**G06V 10/82** *(2022.01)* **G06V 20/56** *(2022.01)*

(52) Cooperative Patent Classification (CPC):
**G06V 20/56; G06V 10/82**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 20.08.2024 US 202463685204 P
09.10.2024 US 202463705463 P

(71) Applicant: **Waymo LLC**
**Mountain View, CA 94043 (US)**

(72) Inventors:
• **HWANG, Jyh-Jing**
**Mountain View, CA 94043 (US)**
• **XU, Runsheng**
**Mountain View, CA 94043 (US)**
• **LIN, Hubert**
**Mountain View, CA 94043 (US)**
• **HUNG, Wei-Chih**
**Taipei (TW)**
• **JI, Jingwei**
**Mountain View, CA 94043 (US)**
• **ANGUELOV, Dragomir**
**Mountain View, CA 94043 (US)**
• **TAN, Mingxing**
**Mountain View, CA 94043 (US)**
• **ZHOU, Yin**
**Mountain View, CA 94043 (US)**

(74) Representative: **Crook, Hugh Alexander et al**
**Venner Shipley LLP**
**200 Aldersgate**
**London EC1A 4HD (GB)**

(54) **MACHINE LEARNING MODELS FOR PROCESSING VEHICLE SENSOR DATA**

(57) Methods, systems, and apparatus, including computer programs encoded on a computer storage medium, for processing sensor data characterizing an environment of a vehicle to generate predictions regarding the environment of the vehicle. In one aspect, a method comprises receiving sensor data comprising one or more observations of a driving environment of a vehicle, receiving a query regarding the driving environment of the vehicle, processing the received sensor data and the received query to generate a network input comprising a plurality of input tokens, and processing the network input using a token processing neural network to generate an output token sequence that represents a response to the received query regarding the driving environment.

VEHICLE QUERY PROCESSING SYSTEM 120

FIG. 2

**Description**

BACKGROUND

This specification relates to processing sensor data characterizing an environment (e.g., a driving environment) for an agent in the environment.

The environment may be a real-world environment, and the agent may be, e.g., a vehicle in the environment.

Processing vehicle sensor data is a task required for motion planning and navigation, e.g., by an autonomous vehicle.

Autonomous vehicles include self-driving cars, boats, and aircraft.

Autonomous vehicles use a variety of on-board sensors and computer systems to detect nearby objects and use such detections to make control and navigation decisions, e.g., by predicting the future trajectories of agents in the vicinity of the autonomous vehicles using the detections.

BRIEF DESCRIPTION OF THE DRAWINGS

FIG. 1A illustrates an example vehicle sensor data processing task using an on-board vehicle query processing system.
FIG. 1B illustrates an example vehicle sensor data processing task using an off-board vehicle query processing system.
FIG. 2 illustrates an example vehicle query processing system.
FIG. 3 is a flow diagram of an example process for processing sensor data for a vehicle using a vehicle query processing system to generate a prediction for the vehicle.
FIG. 4 illustrates a variety of prediction tasks for a vehicle that can be performed by a vehicle query processing system.
FIG. 5 illustrates performing a prediction task for a vehicle using a vehicle query processing system.
FIG. 6 is a flow diagram of an example process for performing a driving task by processing sensor data using a vehicle query system.
FIG. 7 is a flow diagram of an example process for training a vehicle query processing system.
FIG. 8 is a flow diagram of an example process for pre-training an encoder neural network for a sensor modality.
FIG. 9 is a flow diagram of an example process for distilling an initial neural network to generate a simpler, distilled neural network.

Like reference numbers and designations in the various drawings indicate like elements.

DETAILED DESCRIPTION

This specification generally describes a system implemented as computer programs on one or more computers in one or more locations that can process sensor data characterizing an environment of a vehicle to generate predictions regarding the environment of the vehicle. In particular, the described systems can receive a query regarding the environment of the vehicle and can process the query alongside the sensor data to generate predictions in response to the query.

Conventional data processing systems for vehicles often include multiple separate sub-systems configured to perform various data processing and prediction tasks, such as perception systems for processing sensor data collected by vehicle sensors, navigation systems for determining planned vehicle trajectories and control inputs, user interface systems for receiving inputs from and providing information to vehicle users, and so on. The separate sub-systems of a vehicle typically perform interrelated processing tasks for the vehicle that depend on data shared among the multiple sub-systems.

In particular, a conventional data processing system for a vehicle can perform multiple processing tasks for the vehicle by first processing observations of the sensor data using a perception system (e.g., to generate observation embeddings, perform object detection, perform image segmentation, etc.) and then processing outputs from the perception system using other processing systems. For example, a navigation system of the vehicle can process outputs from the observation system (e.g., output data characterizing detected objects, image segmentations, etc.) to generate planned vehicle trajectories and control inputs for the vehicle. As another example, a user interface system of the vehicle can process outputs from the observation system (e.g., output data characterizing detected objects, image segmentations, etc.) and outputs from the navigation system (e.g., output data characterizing planned trajectories, planned control inputs, etc.) to generate descriptions of the vehicle, the vehicle's environment, and so on for informing a user of the vehicle.

The multiple separate sub-systems of conventional data processing systems for vehicles are often trained separately to perform respective processing tasks and often rely on standardized interfaces between the sub-systems to share data between the sub-systems, which can limit the scalability and adaptability of conventional data processing systems. For example, conventional data processing systems for vehicles often use sub-systems that have each been individually trained to attain a particular threshold of accuracy using a specialized set of training data for the sub-system. When the separate sub-systems sequentially process sensor data to generate a prediction for a complex processing task, each sub-system can introduce an error (e.g., while still maintaining a desired accuracy or error tolerance for the individual sub-system) that accumulates as the sub-systems perform the complex processing task. Such error accumulation can limit the number of separate sub-systems that can be used to perform a processing task while still maintaining a desired accuracy for the processing task, which can therefore limit the complexity of processing tasks that can be performed by conventional data processing systems for vehicles.

To perform complex processing tasks for vehicles, conventional data processing systems can use separate sub-systems that have been jointly trained (e.g., fine-tuned) with end-to-end training examples for the complex processing tasks or can use end-to-end machine learning models that have been trained with end-to-end training examples to directly perform the complex processing tasks. However, end-to-end training examples for complex vehicle data processing tasks can be difficult to obtain outside of limited training sets for targeted training scenarios. By training on limited sets of end-to-end training examples for targeted training scenarios, conventional data processing systems for vehicles can struggle to adapt to perform complex processing tasks in rare and novel environments that differ from those of the targeted training scenarios.

The systems described in this specification address these challenges to vehicle data processing by using a token processing neural network (e.g., a language model, a visual language model, a multi-modal language model, etc.) that is trained to perform a variety of prediction tasks for a vehicle by directly processing inputs characterizing sensor data for the vehicle and queries that represent requests to perform the prediction tasks. For example, by receiving appropriate queries, the token processing neural network can generate predictions relating to the immediate safety of the vehicle (e.g., classifications of hazards to the vehicle within the driving environment, classifications of an operational safety of the vehicle, etc.), predictions relating to long-term navigational planning for the vehicle (e.g., classifications of planned routes being inaccessible), predictions relating to informing a user of the vehicle (e.g., classifications of objects and other vehicles within the driving environment of the vehicle, classifications of operational states of the vehicle, natural language descriptions of the vehicle and the driving environment, natural language explanations for predictions, etc.), and so on.

By using a single end-to-end token processing neural network to perform multiple prediction tasks, the described systems can be trained using a set of training data that includes training examples for many different end-to-end data processing tasks for vehicles. End-to-end training using training data for multiple vehicle data processing tasks can enable the described systems to generate more accurate predictions and to better adapt to novel and rare environments compared to conventional vehicle data processing systems. Additionally, in some implementations, the described systems can use a token processing neural network that has been pre-trained to perform, e.g., language processing tasks, spatial reasoning tasks, image captioning tasks, and so on, which can significantly reduce the computational cost (e.g., memory usage, training time, etc.) for training the described systems to perform vehicle data processing tasks and can further increase the adaptability of the described systems by providing pre-trained prediction and reasoning capabilities of the token processing neural network.

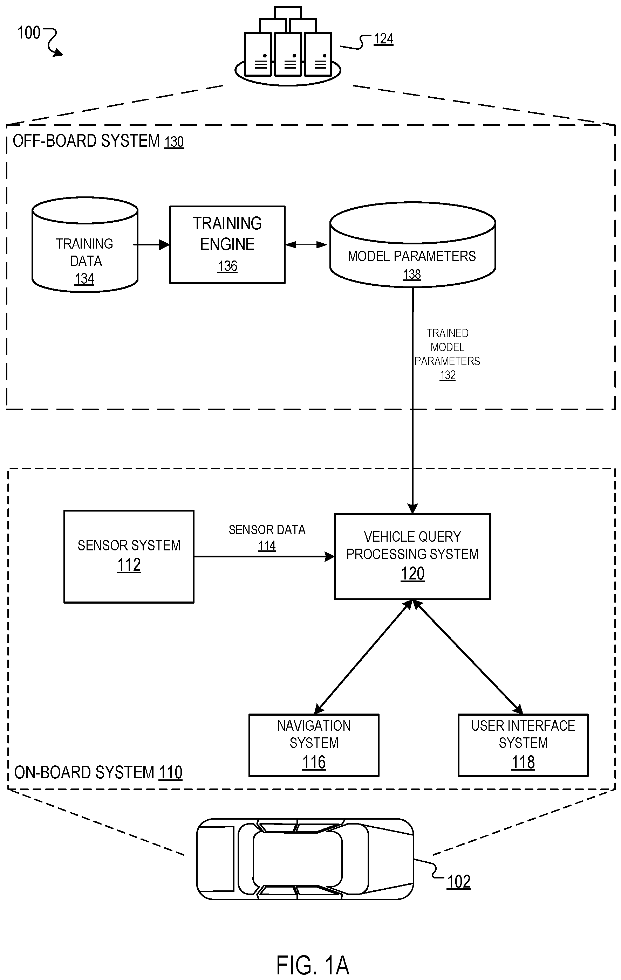

FIG. 1A illustrates an example vehicle sensor data processing task in which an on-board system 110 for a vehicle 102 processes sensor data for the vehicle 102 to generate predictions regarding an environment of the vehicle 102.

The on-board system 110 is located on-board the vehicle 102. The vehicle 102 in FIG. 1A is illustrated as an automobile, but the on-board system 110 can be located on-board any appropriate vehicle type.

In some cases, the vehicle 102 is an autonomous vehicle. An autonomous vehicle can be a fully autonomous vehicle that determines and executes fully-autonomous driving decisions in order to navigate through an environment. An autonomous vehicle can also be a semi-autonomous vehicle that uses predictions to aid a human driver. For example, the vehicle 102 can autonomously apply the brakes if a prediction indicates that a human driver is about to collide with another vehicle. As another example, the vehicle 102 can have an advanced driver assistance system (ADAS) that assists a human driver of the vehicle 102 in driving the vehicle 102 by detecting potentially unsafe situations and alerting the human driver or otherwise responding to the unsafe situation. As a particular example, the vehicle 102 can alert the driver of the vehicle 102 or take an autonomous driving action when an obstacle is detected, when the vehicle departs from a driving lane, or when an object is detected in a blind spot of the human driver.

The on-board system 110 includes a sensor system 112 that includes one or more sensors, some of which are configured to receive reflections of electromagnetic radiation from the environment in the vicinity of the vehicle 102. For example, the sensor system 112 can include one or more laser sensors (e.g., LIDAR laser sensors) that are configured to detect reflections of laser light. As another example, the sensor system 112 can include one or more radar sensors that are configured to detect reflections of radio waves. As another example, the sensor system 112 can include one or more camera sensors that are configured to detect reflections of visible light.

The sensor system 112 continually (i.e., at each of multiple time points) captures observations of sensor data, which can indicate the directions, intensities, and distances travelled by reflected radiation. For example, a sensor in the sensor system 112 can transmit one or more pulses of electromagnetic radiation in a particular direction and can measure the intensity of any reflections as well as the time that the reflection was received. A distance can be computed by determining the time which elapses between transmitting a pulse and receiving its reflection. Each sensor can continually sweep a particular space in angle, azimuth, or both. Sweeping in azimuth, for example, can allow a sensor to detect multiple objects along the same line of sight.

The sensor system 112 can generate sensor data 114 that characterizes the observations of the sensor data captured by the sensors of the vehicle 102. The sensor data 114 characterizes a scene in an environment, e.g., an area of the environment that includes the area within a threshold distance of the autonomous vehicle or the area that is within range of at least one sensor of the vehicle.

In some examples, the sensor data 114 includes observations of sensor data generated by one or more sensors from the sensor system 112. In some examples, the sensor data 114 includes data that has been generated from the outputs of an object detector that processes the observations of sensor data. In some examples, the sensor data 114 includes segmentation data (e.g., image segmentation data, point-cloud segmentation data, etc.) that has been generated by performing segmentation of the observations of sensor data.

Generally, the sensor data 114 can include data for any of a plurality of sensor modalities of the sensor system 112. For example, when the sensor system 112 includes camera sensors, the sensor data 114 can include observation of image data obtained by the camera sensors of the vehicle 102. As another example, when the sensor system 112 includes LIDAR sensors, the sensor data 114 can include observations of point-cloud data obtained by the LIDAR sensors of the vehicle 102. As another example, when the sensor system 112 includes RADAR sensors, the sensor data can include observations of RADAR data obtained by the RADAR sensors of the vehicle 102.

The on-board system 110 can use a vehicle query processing system 120 to generate predictions for the vehicle 102 by processing the sensor data 114, data from other sub-systems of the vehicle 102 (e.g., a navigation system 116 of the vehicle 102, a user interface system 118 of the vehicle, etc.). In particular, the vehicle query processing system 120 can receive a query (e.g., a query from the navigation system 116, a query from the user interface system 118, etc.) and can process the sensor data 114 to generate a prediction for the vehicle 102 in response to the query.

The query can include data characterizing the environment of the vehicle 102. For example, the query can include traffic light state data that provides information about a traffic light state of traffic lights in the environment, road graph data that provides static information about the roadways in the environment, vehicle trajectory data that provides information about, e.g., current, previous, and predicted positions of vehicles in the environment, vehicle interaction data that provides information about interactions between vehicles in the environment, and so on. As another example, the query can include text data for the environment, such as user queries obtained from the user interface system, text descriptions of the environment, a request to perform a particular prediction task, and so on.

The vehicle query processing system 120 can be configured to generate any of a variety of predictions based on the sensor data 114. For example, the vehicle query processing system 120 can be configured to receive a query representing a request to perform a classification task and can process the sensor data 114 to generate classifications for, e.g., a state of the driving environment of the vehicle 102 (e.g., classifications of whether the driving environment is safe, unsafe, obstructed, flooded, etc.), a state of the vehicle 102 (e.g., classification of whether the vehicle is operating safely, operating unsafely, damaged, operating unexpectedly, is experiencing a loss of control, is physically secure, etc.), other agents (e.g., vehicles, pedestrians, pedestrian gestures, objects, etc.) in the driving environment of the vehicle 102 (e.g., classifications of types of the agents, whether the agents are damaged, whether the agents are moving, whether the agents are merging, etc.), and so on. As another example, the vehicle query processing system 120 can be configured to receive a query representing a request to plan to navigate the vehicle 102 and can process the sensor data 114 to generate the requested navigation plan.

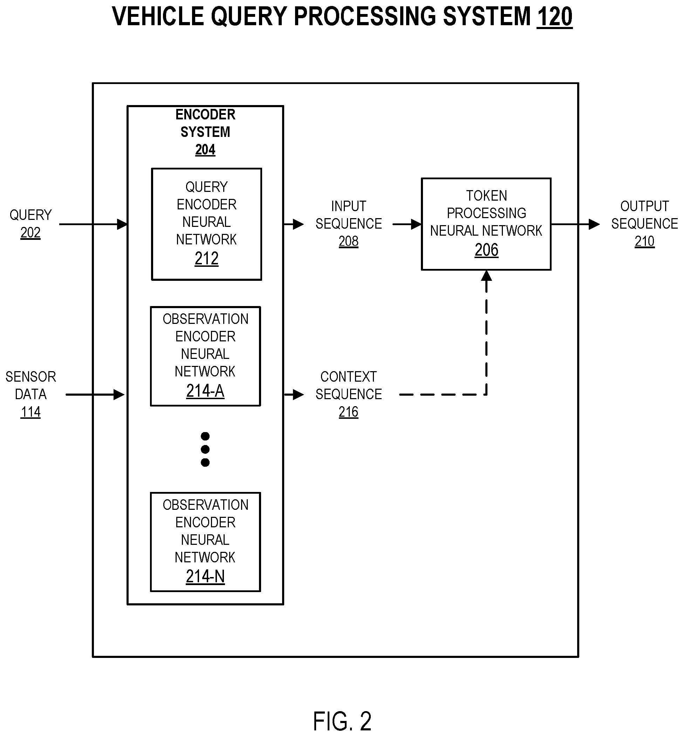

The vehicle query processing system 120 and the predictions generated by the vehicle query processing system 120 are described in further detail below with reference to FIG. 2.

The on-board system 110 can provide predictions generated by the vehicle query processing system 120 to other sub-systems of the vehicle 102 (e.g., the navigation system 116, the user interface system 118 etc.).

For example, when the navigation system 116 receives predictions generated by the vehicle query processing system 120, the navigation system 116 can use the predictions generated by the vehicle query processing system 120 to make fully-autonomous or partly-autonomous driving decisions. For example, the vehicle query processing system 120 can generate a fully-autonomous plan to navigate the vehicle 102 to avoid a collision with another agent by changing the future trajectory of the vehicle 102 to avoid the predicted future trajectory of the agent and the navigation system 116 can process the generated navigation plan to make fully-autonomous or partly-autonomous driving decisions. In a particular example, the on-board system 110 can provide the navigation system 116 with predictions generated by the vehicle query processing system 120 indicating that another vehicle which is attempting to merge onto a roadway being travelled by the vehicle 102 is unlikely to yield to the vehicle 102. In this example, the navigation system 116 can generate fully-autonomous control outputs to apply the brakes of the vehicle 102 to avoid a collision with the merging vehicle. The fully-autonomous or partly-autonomous driving decisions generated by the navigation system 116 can be implemented by a control system of the vehicle 102. For example, in response to receiving a fully-autonomous driving decision generated by the navigation system 116 which indicates that the brakes of the vehicle should be applied, the control system may transmit an electronic signal to a braking control unit of the vehicle. In response to receiving the electronic signal, the braking control unit can mechanically apply the brakes of the vehicle.

When the user interface system 118 receives predictions generated by the vehicle query processing system 120, the user interface system 118 can use the predictions generated by the vehicle query processing system 120 to present information to the driver of the vehicle 102 to assist the driver in operating the vehicle 102 safely. The user interface system 118 can present information to the driver of the vehicle 102 by any appropriate means, for example, by an audio message transmitted through a speaker system of the vehicle 102 or by alerts displayed on a visual display system in the vehicle (e.g., an LCD display on the dashboard of the vehicle 102). In a particular example, the on-board system 110 can provide the user interface system 118 with trajectory prediction output indicating that another vehicle which is attempting to merge onto a roadway being travelled by the vehicle 102 is unlikely to yield to the vehicle 102. In this example, the user interface system 118 can present an alert message to the driver of the vehicle 102 with instructions to adjust the trajectory of the vehicle 102 to avoid a collision with the merging vehicle.

The vehicle query processing system 120 can include one or more predictive machine learning models configured to process the sensor data 114 and generate predictions regarding the environment of the vehicle 102. Prior to the on-board system 110 using the vehicle query processing system 120 to make predictions, a training system 130 can determine trained model parameters 132 for the vehicle query processing machine learning models of the system 120.

The training system 130 is typically hosted within a data center 124, which can be a distributed computing system having hundreds or thousands of computers in one or more locations.

The training system 130 can train vehicle query processing machine learning models for the vehicle query processing system 120 using training data 134 of the system 130. The training data 134 generally includes example data characterizing example environments for example vehicles. The training data 134 can be obtained from real or simulated driving data logs.

As an example, the training data 134 can include example data for the one or more sensor data modalities (e.g., images, point-clouds, etc.) representing example observations of sensor data. The training data 134 can include example queries that include data characterizing the example environments of the example vehicles. The example queries can include traffic light state data that provides information about traffic light states of traffic lights in the example environments, road graph data that provides static information about the roadways in the example environments, vehicle trajectory data that provides information about, e.g., current, previous, and predicted positions of vehicles in the example environments, vehicle interaction data that provides information about interactions between vehicles in the example environments, and so on. As another example, the example query can include text data for the example environment, such as example user queries, text descriptions of the example environments, example requests to perform particular prediction tasks, and so on.

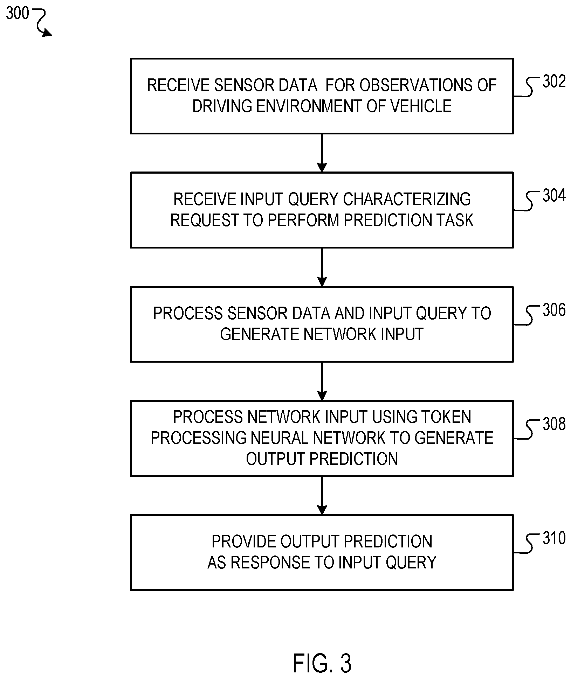

The training engine 136 trains the vehicle query processing machine learning models for the vehicle query processing system 120 to update model parameters 138 by optimizing an objective function based on target predictions for the training data 134, e.g., an objective function that measures likelihoods of the generating the target predictions by processing corresponding example sensor data and example queries, as described in more detail below with reference to FIG. 3.

After training vehicle query processing machine learning models, the training system 130 can send the trained model parameters 132 to the vehicle query processing system 120, e.g., through a wired or wireless connection.

In some implementations, the driving environment can be a simulated driving environment and the vehicle 102 can be a simulated vehicle navigating the simulated driving environment. The simulated driving environment can represent a real-world driving environment and the vehicle query processing system 120 can generate predictions for simulating the real-world driving environment. For example, the vehicle query processing system 120 can receive input data specifying a simulated scenario for the vehicle 102 and can generate predictions for the simulated driving scenario, such as trajectories for objects in the simulated scenario, sensor data for the vehicle 102 in the simulated scenario, and so on.

While this specification describes processing sensor data and generating predictions on-board an autonomous vehicle, more generally, the described techniques can be implemented on any system of one or more computers that receives images of scenes in an environment. That is, once the training system 130 has trained the vehicle query processing system 120, the vehicle query processing system 120 can be used by any system of one or more computers.

As one example, the vehicle query processing system 120 can be a part of an on-board system 110 for a different type of agent that has sensors and that interacts with objects as it navigates through an environment. For example, the vehicle query processing system 120 can process sensor data and generate predictions for a robot or other agent.

As another example, the vehicle query processing system 120 can be a part of an off-board system 130 that is remote from the agent and that receives data generated by sensors and navigation systems of the agent. When the vehicle query processing system 120 is part of an off-board system 130, the off-board system 130 can generate responses to queries for the agent (e.g., queries transmitted to the off-board system by the on-board system 110 for the agent) and can transmit the generated responses to the on-board system 110. The on-board system 110 can process the responses transmitted by the off-board system 130 to control the agent.

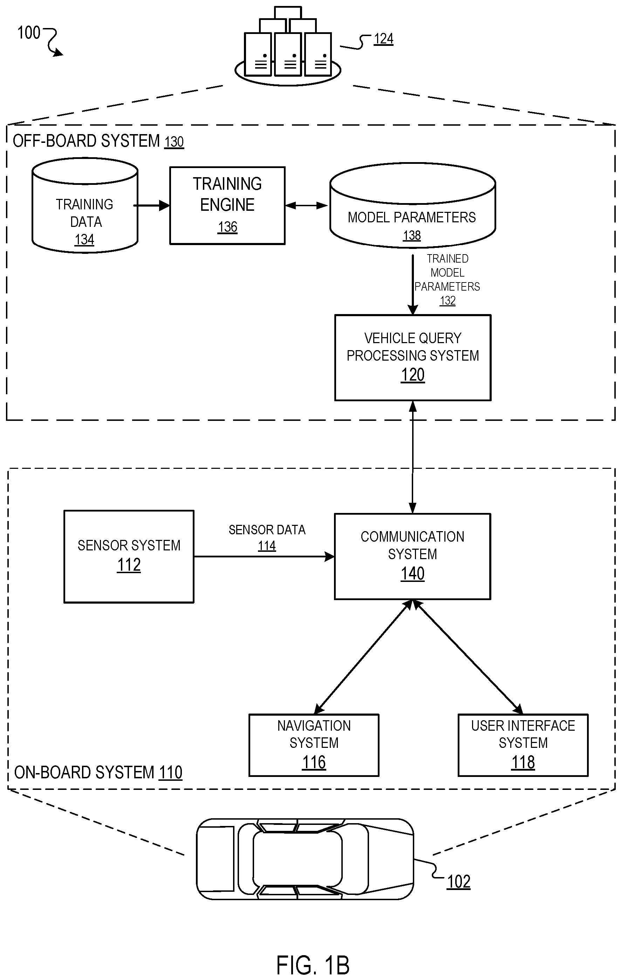

FIG. 1B illustrates an example vehicle sensor data processing task in which the off-board system 130 includes the vehicle query processing system 120 and processes sensor data for the vehicle 102 to generate predictions regarding the environment of the vehicle 102.

As illustrated in FIG. 1B, the vehicle query processing system 120 can be located on one or more computers that are remote from the vehicle 102 (e.g., within the data center 124) and can receive data as transmitted by the vehicle 102, e.g., as transmitted by a communication system 140 of the vehicle 102. The vehicle query processing system 120 can process, e.g., sensor data 114 obtained by the sensor system 112, input queries, and so on, transmitted by the communication system 140 of the vehicle 102 to the system 120 in order to generate a prediction of the driving environment for the vehicle 102. The system 120 can then transmit the generated prediction to the vehicle 102, e.g., for use in performing fully-autonomous or semi-autonomous driving tasks.

As an example, the vehicle query processing system 120 can monitor or request data from the vehicle 102. For example, the vehicle query processing system 120 can, in response to a query from the off-board system 130, request and process sensor data 114 from the vehicle 102 to generate a prediction regarding the vehicle 102. As a further example, the vehicle query processing system 120 can process data from the vehicle 102 to predict a safety of the vehicle and, upon detecting an unsafe situation, can transmit data to an ADAS system of the vehicle 102 that can then alert a human driver of the vehicle. As another example, the vehicle query processing system 120 can process sensor data, navigation data, and queries transmitted by the vehicle 102, determine a planned trajectory for the vehicle 102 through the driving environment, and transmit the planned trajectory to the vehicle 102. As another example, the vehicle query processing system 120 can process sensor data 114, navigation data, and queries transmitted by the vehicle 102, determine predicted trajectories for objects in the driving environment around the vehicle 102, and transmit the predicted trajectories to the vehicle 102.

When the vehicle query processing system 120 is located on one or more computers that are remote from the vehicle 102, the system 120 can receive and process data generated by sources other than sensors and systems of the vehicle 102 as part of generating predictions for the vehicle 102. For example, the vehicle query processing system 120 can receive and process sensor data obtained by sensors outside the vehicle 102 that are observing the driving environment of the vehicle 102. As another example, the vehicle query processing system 120 can receive and process sensor data and navigation data transmitted to the system 120 by other vehicles in the driving environment of the vehicle 102. By processing data from sources other than systems of the vehicle 102, the vehicle query processing system 120 can transmit information to the vehicle 102 that may otherwise be unavailable to the vehicle 102. As a further example, if a portion of the driving environment is obstructed from the view of sensors on-board the vehicle 102, the vehicle query processing system 120 can transmit predictions to the vehicle 102 that can provide information to the vehicle 102 about the obstructed portion of the driving environment.

In some implementations, the on-board system 110 can include a portion of the vehicle query processing system 120 and the off-board system 130 can include another portion of the vehicle query processing system 120. For example, the vehicle query processing system 120 can include various light weight encoder neural networks (e.g., for encoding text data, observations of sensor data, etc.) and a larger, more complex and resource intensive token processing neural network (e.g., a language model). The on-board system 110 can include the light weight encoder neural networks of the vehicle query processing system 120 and can process data from the vehicle 102 (e.g., the sensor data 114) to generate data encodings (e.g., token sequences representing the data from the vehicle 102) that the vehicle 102 can transmit to the off-board system 130 for further processing. The off-board system 130 can include the token processing neural network and can process data encodings transmitted by the vehicle 102 using the token processing neural network to generate predictions for the vehicle 102.

FIG. 2 illustrates an example vehicle query processing system 120. As described above the vehicle query processing system 120 can process sensor data 114 for a vehicle and a query 202 to generate a prediction regarding the vehicle, an environment of the vehicle, agents within the environment of the vehicle, and so on. In particular, the query 202 can include text data representing a request (e.g., text data characterizing a natural language request) to process the sensor data 114 to perform a particular prediction task for the vehicle.

As described above, the sensor data 114 can include observations of the driving environment of the vehicle for any of a variety of sensors of the vehicle. For example, the sensor data 114 can include observations of, e.g., image data obtained by camera sensors of the vehicle, point-cloud data obtained by LIDAR sensors of the vehicle, RADAR data obtained by the RADAR sensors of the vehicle, and so on.

The vehicle query processing system 120 can include an encoder system 204 and a token processing neural network 206. The encoder system 204 can be configured to process the sensor data 114 and the query 202 to generate an input sequence 208 of input tokens for the token processing neural network 206 that jointly represents the query 202 and the sensor data 114. The token processing neural network 206 can be configured (e.g., trained) to generate an output sequence of tokens 210 that represents the output prediction for the query 202 and the sensor data 114.

The encoder system 204 can include a plurality of encoder neural networks that are each configured to process and encode a respective input as a sequence of input tokens. The encoder system 204 can generate the input sequence 208 to include some or all of the input tokens generated by the encoder neural networks processing the query 202 and the sensor data 114.

As an example, encoder system 204 can include a query encoder neural network 212 configured (e.g., trained) to process the query 202 and generate a sequence of input tokens representing the query 202. The query encoder neural network 212 can include any of a variety of processing layers (e.g., convolutional layers, graph processing layers, recurrent layers, attention layers, and so on) for processing the query 202 and generating a sequence of input tokens representing the query 202. For example, when the query 202 includes text data (e.g., text data characterizing a natural language request to perform a particular prediction task), the query encoder neural network 212 can be a text encoding neural network configured to generate a sequence of input tokens representing the text data of the query 202.

The encoder system 204 can include any combination of observation encoder neural networks 214-A through 214-N configured (e.g., trained) to process observations of the sensor data 114 to generate sequences of sensor tokens representing the observations. Each of the observation encoder neural networks 214-A through 214-N can include any of a variety of processing layers (e.g., convolutional layers, graph processing layers, recurrent layers, attention layers, and so on) for processing some or all of the sensor data 114 to generate respective sequences of sensor tokens.

In particular, the encoder system 204 can include observation encoder neural networks for each of one or more of the sensor modalities of the vehicle. For example, the encoder system 204 can include image encoder neural networks configured to generate sequences of sensor tokens representing observations of image data obtained by camera sensors of the vehicle, LIDAR encoder neural networks configured to generate sequences of sensor tokens representing observations of point-cloud data obtained by LIDAR sensors of the vehicle, RADAR encoder neural networks configured to generate sequences of sensor tokens representing observations of RADAR data obtained by RADAR sensors of the vehicle, and so on.

As an example, the observation encoder neural networks 214-A through 214-N can include one of more image encoder neural networks that include convolutional processing layers. Each image embedding neural network can generate sequences of input tokens representing observations of image data (e.g., including input tokens representing pixels, groups of pixels, etc.) by processing the image data using the convolutional processing layers of the image encoder neural network.

As another example, the observation encoder neural networks 214-A through 214-N can include one of more vision transformer neural networks that are configured to generate sequences of input tokens representing observations of image data (e.g., including input tokens representing pixels, groups of pixels, etc.) by processing the image data.

As another example, the observation encoder neural networks 214-A through 214-N can include one or more RADAR encoder neural networks, e.g., that include convolutional processing layers. Each RADAR encoder neural network can generate sequences of input tokens representing observations of RADAR data (e.g., including input tokens representing respective RADAR signal return strengths) by processing the RADAR data using the convolutional processing layers of the RADAR encoder neural network.

As another example, the observation encoder neural networks 214-A through 214-N can include one or more LIDAR encoder neural networks that include graph processing layers. Each LIDAR encoder neural network can process an input graph representing an observation of a point-cloud of LIDAR data (e.g., an input graph that includes a respective graph node characterizing each point in the point-cloud) using the graph processing layers of the LIDAR encoder neural network to generate a sequence of input tokens representing the point-cloud of LIDAR data. For example, each LIDAR embedding neural network can be configured to perform a sequence of message passing operations using the graph processing layers of the LIDAR encoder neural network to process the input graph and generate the sequence of input tokens representing the observation of point-cloud LIDAR data (e.g., including input tokens representing respective points within the LIDAR point-clouds).

In some implementations, each of one or more of the observation encoder neural networks 214-A through 214-N can be configured to process sensor data 114 for a respective plurality of sensor modalities to generate sequences of sensor tokens that jointly represent the respective plurality of sensor modalities. For example, each of one or more of the observation encoder neural networks 214-A through 214-N can be configured to process a respective plurality of sensor modalities using a data fusion technique to generate sequences of sensor tokens that jointly represent the respective plurality of sensor modalities. For example, an observation encoder neural network can perform data fusion to generate sensor tokens representing a plurality of input sensor modalities by (i) processing each input sensor modality using a respective encoder neural network for the sensor modality to generate a sequence of tokens representing the sensor modality and (ii) processing the sequences of tokens for each of the input sensor modalities using a transformer neural network to generate an output sequence of tokens that jointly represent the plurality of input sensor modalities. By using such data fusion techniques, an observation encoder neural network can be configured to generate sensor tokens that jointly represent any appropriate combination of sensor modalities. For example, an observation encoder neural network can generate sensor tokens that jointly represent, e.g., image and LIDAR sensor data; image and RADAR sensor data; LIDAR and RADAR sensor data; image, LIDAR, and RADAR sensor data; and so on.

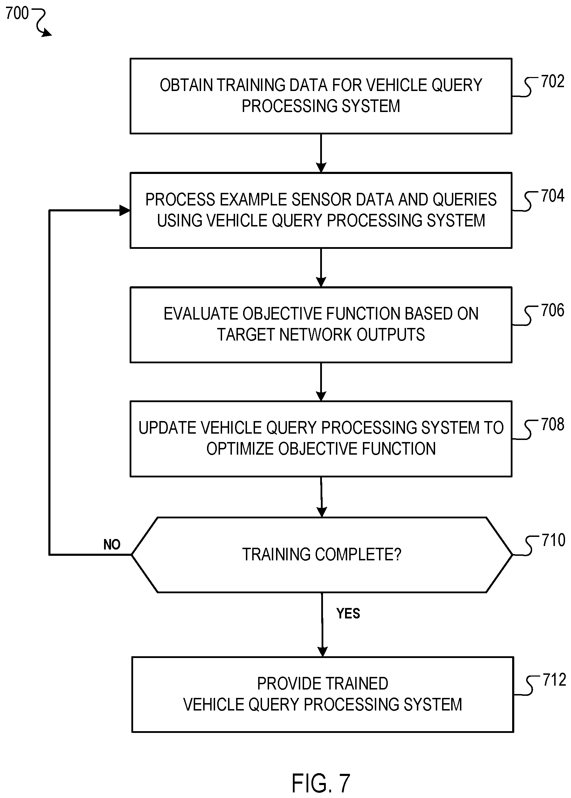

Some or all of the query encoder neural network 212 and the observation encoder neural networks 214-A through 214-N can be trained (e.g., fine-tuned) to generate sequences of input tokens for the token processing neural network 210 as part of performing end-to-end training (e.g., fine-tuning) of the vehicle processing system 120, as described in more detail below with reference to FIG. 7.

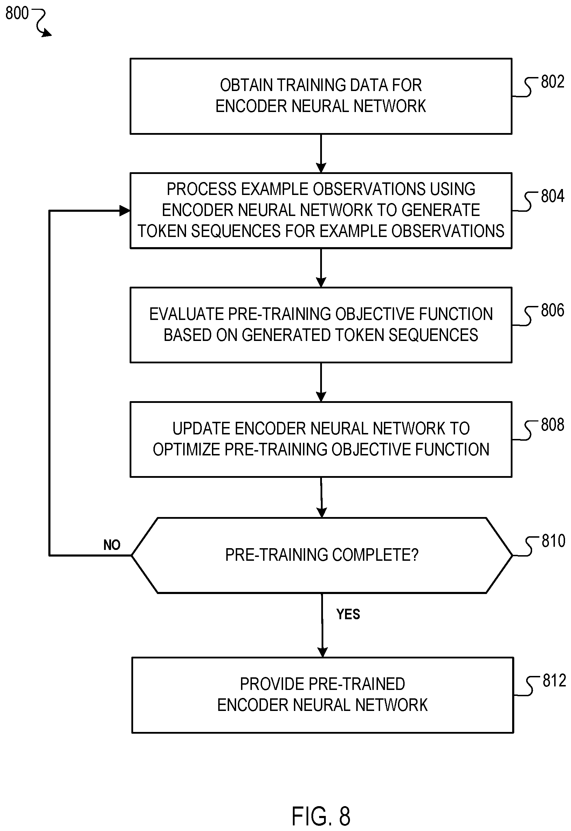

In some implementations, some or all of the observation encoder neural networks 214-A through 214-N can be pre-trained to generate sequences of sensor tokens for particular sensor modalities. An example process for pre-training an encoder neural network to generate sequences of sensor tokens for a particular sensor modality is described in more detail below with reference to FIG. 8.

The encoder system 204 can include encoder neural networks that have been trained (e.g., pre-trained) to perform different processing tasks before being trained to generate sequences of input tokens for the token processing neural network 206. For example, some or all of the observation encoder neural networks 214-A through 214-N can be vision encoding neural networks for, e.g., a language model, a vision language model, and so on that are further trained (e.g., following the process 800 of FIG. 8) to generate sequences of sensor tokens for particular sensor modalities. As another example, the query encoder neural network 212 can be a text processing neural network of, e.g., a language model, a vision language model, and so on that is further trained (e.g., as part of the process 700 of FIG. 7) to generate sequences of input tokens representing input queries for the token processing neural network 206.

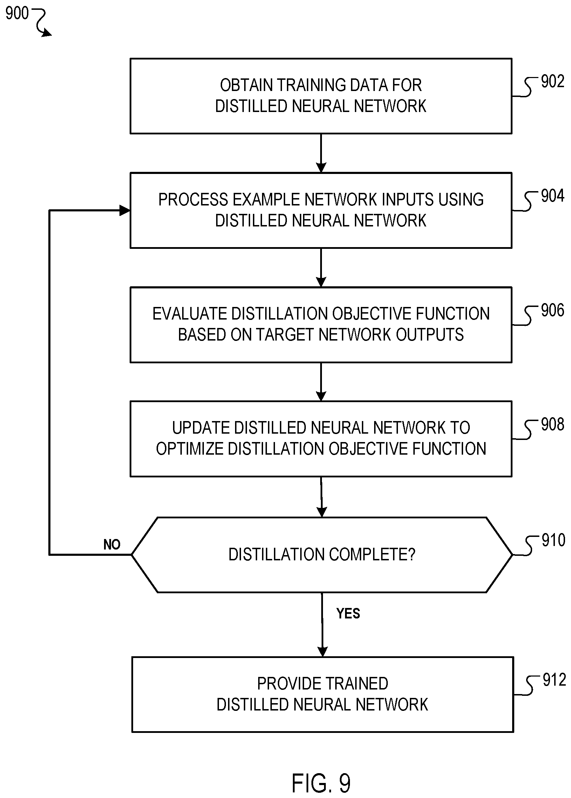

In some implementations, the encoder system 204 can include encoder neural networks that have been distilled from neural networks that have been trained to perform different processing tasks. For example, some or all of the observation encoder neural networks 214-A through 214-N can be distillations of vision encoding neural networks for, e.g., a language model, a vision language model, and so on, that are further trained (e.g., following the process 800 of FIG. 8) to generate sequences of sensor tokens for the particular sensor modalities. As another example, the query encoder neural network 212 can be a distillation of a text processing neural network of, e.g., a language model, a vision language model, and so on, that is further trained (e.g., as part of the process 700 of FIG. 7) to generate sequences of input tokens representing input queries for the token processing neural network 206. An example process for distilling a neural network is described in more detail below with reference to FIG. 9.

The token processing neural network 206 can have any appropriate neural network architecture for processing the input sequence 208 to generate the output sequence 210 of tokens representing the prediction generated by the vehicle query processing system 120. The token processing neural network 206 can include any of a variety of processing layers (e.g., convolutional layers, graph processing layers, recurrent layers, attention layers, and so on) for processing the input token sequence 208 to generate the output token sequence 210. For example, the token processing neural network 206 can be a language model (e.g., a visual language model, a multi-modal language model, etc.) that includes attention network layers configured to perform respective attention operations as part of processing the input token sequence 208 to generate the output token sequence 210.

In some implementations, the token processing neural network 206 can be configured to conditionally generate the output token sequence 210 as conditioned on a context sequence of tokens 216. As one example, the token processing neural network 206 can be configured to process a network input that includes the input token sequence 208 and the context token sequence 216. As another example, the token processing neural network 206 can include one or more cross-attention layers that can perform cross-attention operations using the context token sequence 216 to generate the output token sequence 210, e.g., by performing respective cross-attention operations between (i) respective layer inputs and (ii) the context token sequence 216. The encoder system 204 can generate the context token sequence 216 to include input tokens generated by the encoder neural networks of the encoder system 204 processing the query 202 and the sensor data 114. When the query 202 includes text data that provides a context for a prediction task and the encoder system 204 can generate the context token sequence 216 to include a sequence of input tokens generated by the query encoder neural network 212 that represents the context for the prediction task. In some implementations, the context token sequence 216 can include some or all of the sensor tokens generated by the observation encoder neural networks 214-A through 214-B.

The token processing neural network 206 can be trained (e.g., fine-tuned) to process input token sequence for example prediction tasks as part of performing end-to-end training (e.g., fine-tuning) of the vehicle processing system 120, as described in more detail below with reference to FIG. 7. In some implementations, the token processing neural network 206 can be trained (e.g., pre-trained) to perform different processing tasks before being trained as part of the vehicle query processing system 120. For example, the token processing neural network 206 can be, e.g., a language model, a vision language model, and so on that has been pre-trained to perform, e.g., language processing tasks, spatial reasoning tasks, image captioning tasks, and so on before being further trained as part of the vehicle processing system 120. As another example, the token processing neural network 206 can be a distillation of, e.g., a language model, a vision language model, and so on, that has been pre-trained to perform, e.g., language processing tasks, spatial reasoning tasks, image captioning tasks, and so on before being further trained as part of the vehicle processing system 120.

In general, the token processing neural network 206 can generate the output token sequence 210 can include data characterizing any of a variety of predictions for the vehicle. In particular, when the query 202 represents a request to perform a particular prediction, the output sequence 210 can include data characterizing a prediction for the particular prediction task. For example, the output sequence 210 can include tokens representing output text data, such as text descriptions of the environment of the vehicle, natural language descriptions and/or explanations of predictions generated by the token processing neural network 206, and so on. As another example, the output sequence 210 can include tokens representing output navigation data. For example, the output sequence 210 can include tokens representing, e.g., predicted traffic light states of traffic lights in the environment of the vehicle, predicted positions of agents in the environment of the vehicle, predicted interactions between agents in the environment of the vehicle, and so on. As another example, the output sequence 210 can include data characterizing a planned trajectory by including tokens representing, e.g., planned coordinate waypoints in the environment for the planned trajectory, planned control inputs for the vehicle, higher-level navigation commands for the vehicle, and so on. As another example, the output sequence 210 can include tokens characterizing detected objects within the sensor data 114 representing, e.g., coordinate locations for the detected objects, bounding boxes specifying locations and extents of the detected objects, and so on. Examples of generating output sequences 210 for various prediction tasks are described in more detail below with reference to FIG. 3.

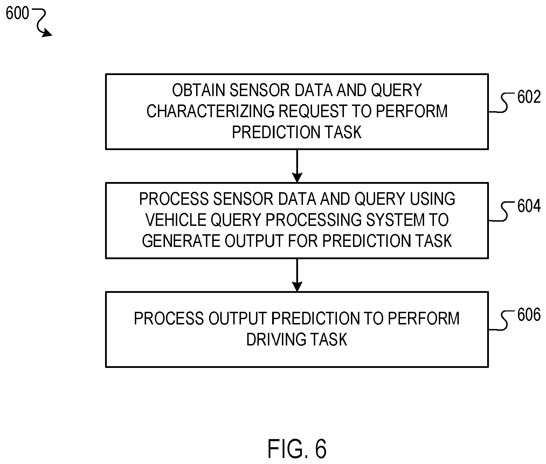

After generating the output token sequence 210, the vehicle processing system 120 can provide the output token sequence 210 to other sub-systems of the vehicle to perform any of a variety of driving tasks for the vehicle, as described in more detail below with reference to FIG. 6.

As described above, each of the neural networks of the vehicle query processing system 120 (e.g., the token processing neural network 206, the query encoder neural network 212, the observation encoder neural networks 214-A through 214-N, etc.) can be jointly trained (e.g., fine-tuned) as part of performing end-to-end training of the vehicle processing system 120. The vehicle processing system 120 can be trained using a set of training data that includes training examples for many different end-to-end data processing tasks for vehicles, as described in more detail below with reference to FIG. 7. Jointly training the neural networks of the vehicle query processing system 120 using training examples for multiple end-to-end data processing tasks can enable the vehicle query processing system 120 to generate more accurate predictions and to better perform prediction tasks that differ from those used to train the system 120.

Additionally, in some implementations, each of the neural networks of the vehicle query processing system 120 (e.g., the token processing neural network 206, the query encoder neural network 212, the observation encoder neural networks 214-A through 214-N, etc.) can be pre-trained to perform to perform different processing tasks (e.g., language processing tasks, spatial reasoning tasks, image processing tasks, etc.) before being trained as part of the vehicle processing system 120. The neural networks of the vehicle query processing system 120 can be pretrained using significantly larger training data sets (e.g., that include training examples for many different processing tasks beyond end-to-end vehicle data processing tasks), which can further increase the adaptability of the vehicle query processing system 120 by pre-training the neural networks of the vehicle query processing system 120 to perform more general prediction and processing tasks.

Complex and computationally costly neural networks can be impractical for use in on-board data processing systems, which can have significant hardware constraints (e.g., memory limitations) resulting from being carried by the vehicle. Reducing the complexity and hardware requirements of observation processing systems is therefore a key challenge for deployment onboard autonomous vehicle systems. To reduce the complexity of the system 120 when deployed as an on-board system of the vehicle, the system 120 can be distilled to include smaller, less complex neural network, e.g., by distilling each of the neural networks of the system 120 following the process 900 of FIG. 9.

FIG. 3 is a flow diagram of an example process 300 for processing sensor data for a vehicle using a vehicle query processing system to generate a prediction for the vehicle. For convenience, the process 300 will be described as being performed by a system of one or more computers located in one or more locations. For example, vehicle query processing system of the vehicle, e.g., the vehicle query processing system 120 of FIG. 1A, appropriately programmed in accordance with this specification, can perform the process 300.

The system can receive one or more observations of sensor data for the vehicle characterizing a driving environment of the vehicle (step 302). For example, the system can receive one or more observations of, e.g., image data obtained by camera sensors of the vehicle, point-cloud data obtained by LIDAR sensors of the vehicle, RADAR data obtained by the RADAR sensors of the vehicle, and so on.

The system can receive the sensor data as generated by a perception system of the vehicle. In some implementations, the system can be an on-board sub-system of the vehicle and can directly receive the sensor data from the perception system of the vehicle. In other implementations, the system can be an off-board system and can receive the sensor data as transmitted by the vehicle (e.g., as transmitted by a communications system of the vehicle).

The system can receive an input query that represents a request to perform a prediction task for the vehicle (step 304). In general, the input query can be, e.g., a query regarding the driving environment of the vehicle, a query regarding a state of the vehicle, and so on. In particular, the query can include text data representing a request (e.g., text data characterizing a natural language request) to process the sensor data to perform the prediction task for the vehicle.

The query can represent a request to perform any of a variety of prediction tasks for the vehicle. The requested prediction task can include, e.g., generating a planned trajectory of the vehicle through the driving environment, predicting a state of the vehicle, predicting a state of one or more objects on an exterior or in an interior of the vehicle, generating a prediction characterizing the driving environment of the vehicle, generating a prediction characterizing an object in the driving environment of the vehicle (e.g., by predicting a behavior of the object in the driving environment of the vehicle, generating a predicted location for the object in the driving environment of the vehicle, generating a predicted bounding box specifying a location and spatial extent for the object in the driving environment of the vehicle, etc.), and so on.

For example, the system can receive queries such as "What are my future driving actions?", "Detect everything in 3D", "Estimate a drivable road graph", "Is the road ahead temporarily blocked?", and so on.

In some cases, the query can include a request to generate a rationale (e.g., a natural language explanation) explaining the prediction.

The query can include any of a variety of contextual data for performing the prediction task. For example, the query can include one or more navigation commands for the vehicle, such as "Turn right at the next intersection", "Merge onto the freeway", "Stop at the crosswalk", and so on. As another example, the query can include data characterizing a current state of the vehicle, such as a current location of the vehicle, current velocity of the vehicle, current control inputs for the vehicle, and so on. As another example, the query can include data characterizing one or more previous states of the vehicle, such as a prior trajectory of the vehicle, previous control inputs for the vehicle, and so on. As another example, the query can include data characterizing a current state of the driving environment of the vehicle, such as current positions for objects within the driving environment, a road graph characterizing lanes in the driving environment, current states of traffic signals in the driving environment. As another example, the query can include data characterizing one or more previous states of the driving environment of the vehicle, such as previous trajectories for objects in the driving environment.

The system can receive the query from any appropriate source. For example, the system can receive the query from a sub-system of the vehicle (e.g., directly from the sub-system when the system is on-board the vehicle, as transmitted from the vehicle when the system is an off-board system, etc.). As another example, the system can receive the query from an off-board system (e.g., as transmitted to the vehicle by the off-board system when the system is on-board the vehicle, directly from the off-board system when the system is also an off-board system, and so on).

The system can process the received sensor data and input query to generate a network input for a token processing neural network that includes a plurality of input tokens (step 306). In particular, the system can include a plurality of encoder neural networks and can generate input tokens for the token processing network by processing the sensor data and the input query using the plurality of encoder neural networks.

For example, the system can include a query encoder neural network configured (e.g., trained) to process the query and generate a sequence of input tokens representing the query. The query encoder neural network can include any of a variety of processing layers (e.g., convolutional layers, graph processing layers, recurrent layers, attention layers, and so on) for processing the query and generating a sequence of input tokens representing the query. For example, when the query includes text data (e.g., text data characterizing a natural language request to perform a particular prediction task), the query encoder neural network can be a text encoding neural network configured to generate a sequence of input tokens representing the text data of the query.

As another example, the system can generate the network input to include one or more sequences of sensor tokens representing each of the one or more observations of the driving environment of the vehicle. In particular, as described above with reference to FIG. 2, the system can process the one or more observations of the driving environment of the vehicle using one or more observation encoder neural networks to generate the sequences of sensor tokens representing the one or more observations.

The system can include any combination of observation encoder neural networks configured (e.g.,

trained) to process observations of sensor data to generate sequences of sensor tokens representing the observations. Each of the observation encoder neural networks can include any of a variety of processing layers (e.g., convolutional layers, graph processing layers, recurrent layers, attention layers, and so on) for processing some or all of the sensor data to generate respective sequences of sensor tokens.

In particular, the system can include observation encoder neural networks for each of one or more of the sensor modalities of the vehicle. For each of the one or more sensor modalities for the vehicle, the system can process each observation for the sensor modality using each encoder neural network for the sensor modality to generate a respective sequence of sensor tokens representing the observation.

For example, the system can include one or more image encoder neural networks that can generate sequences of input tokens representing observations of image data (e.g., including input tokens representing pixels, groups of pixels, etc.) by processing the image data using the convolutional processing layers. As another example, the system can include one of more vision transformer neural networks that are configured to generate sequences of input tokens representing observations of image data (e.g., including input tokens representing pixels, groups of pixels, etc.) by processing the image data. As another example, the system can include one or more RADAR encoder neural networks that can generate sequences of input tokens representing observations of RADAR data (e.g., including input tokens representing respective RADAR signal return strengths) by processing the RADAR data using the convolutional processing layers. As another example, the system can include one or more LIDAR encoder neural networks that can generate sequences of input tokens representing observations of point-cloud LIDAR data (e.g., including input tokens representing respective points within the LIDAR point-clouds) by using graph processing layers to process input graphs representing the observations of point-cloud LIDAR data.

Some or all of the query encoder neural network and the observation encoder neural networks can be jointly trained (e.g., fine-tuned) with the token processing network to generate sequences of input tokens for the token processing neural network, as described in more detail below with reference to FIG. 7.

The system can process the network input using the token processing neural network to generate a response to the received query (step 308). In particular, the token processing neural network can process the network input to generate an output token sequence that represents the response to the received query. For example, the output token sequence can represent the output prediction for the prediction task requested by the received query.

The token processing neural network can have any appropriate neural network architecture for processing the input sequence to generate the output sequence of tokens representing the output prediction. The token processing neural network can include any of a variety of processing layers (e.g., convolutional layers, graph processing layers, recurrent layers, attention layers, and so on) for processing the input token sequence to generate the output token sequence. For example, the token processing neural network can be a language model (e.g., a visual language model, a multi-modal language model, etc.) that includes attention network layers configured to perform respective attention operations as part of processing the input token sequence to generate the output token sequence.

The token processing neural network can be configured to auto-regressively generate the output token sequence. In particular, the token processing neural network can auto-regressively generate each output token of the output token sequence by processing respective network input for the output token to determining likelihoods for each of a set of possible token values for the output token and selecting a token value for the output token from the set of possible token values for the output token (e.g., by sampling the token value for the output token in accordance with the determined likelihoods for the set of possible token values). When the token processing neural network auto-regressively generates the output token sequence, the respective network input for generating each output token can be a token sequence that includes the input token sequence for the token processing neural network and each previously generated output token.

In some implementations, the token processing neural network can be configured to conditionally generate the output token sequence as conditioned on a context sequence of tokens. As one example, the token processing neural network can be configured to process a network input that includes the input token sequence and the context token sequence. As another example, the token processing neural network can include one or more cross-attention layers that can perform cross-attention operations between the input token sequence and the context token sequence to generate the output token sequence. When the query includes contextual data that provides a context for the prediction task, the context token sequence can include a sequence of input tokens generated by the query encoder neural network that represents the context for the prediction task. In some implementations, the context token sequence can include some or all of the sensor tokens generated by the observation encoder neural networks.

The token processing neural network can be jointly trained (e.g., fine-tuned) with some or all of the query encoder neural network and the observation encoder neural networks to generate predictions for example prediction tasks, as described in more detail below with reference to FIG. 7.

In general, the token processing neural network can generate the output token sequence to include data characterizing any of a variety of predictions for the vehicle. In particular, when the query represents a request to perform a particular prediction task, the output sequence can include data characterizing a prediction for the particular prediction task.

As an example, the prediction task can include generating a planned trajectory of the vehicle through the environment (e.g., through a driving environment). The output token sequence can specify the planned trajectory by including output tokens representing, e.g., planned coordinate waypoints in the environment, planned control inputs for the vehicle, higher-level navigation commands for the vehicle, and so on. As a further example, the query can include higher-level navigation commands for the vehicle and the token processing neural network can generate the planned trajectory in order to perform the higher-level navigation commands. For example, the query can be "Determine a plan to turn right at the upcoming intersection" and the output sequence can include text characterizing, e.g., waypoint coordinates for performing the desired turn, control inputs for the vehicle to perform the desired turn, higher level instructions such as "Decelerate, check that intersection is clear of pedestrians and oncoming traffic, and turn right when able", and so on.

As another example, the prediction task can include generating predictions regarding, e.g., the vehicle, the environment of the vehicle, objects in the environment of the vehicle, and so on. For example, the query can be "Is the vehicle safe?" and the output sequence can include text characterizing the safety of the vehicle. As another example, the query can include requests to perform predictions such as, e.g., "Can the vehicle turn at the intersection?", "Can the vehicle safely stop?", "Can the vehicle safely move through the intersection?", "Can the vehicle merge?", "Is the lane ahead blocked?", "Is the vehicle blocking the lane?", and so on, and the output sequence can include text characterizing the requested predictions for the vehicle. As another example, the query can include requests such as "Predict what the vehicle ahead is likely to do" and the output sequence can include text characterizing the requested prediction for the other vehicle including, e.g., coordinate waypoints for a predicted trajectory of the other vehicle, higher-level predictions regarding the behavior of the other vehicle (e.g., "likely to stop", "will merge", "is turning", etc.), and so on. As another example, the query can include requests such as "Describe the environment ahead" and the output sequence can include text characterizing the driving environment of the vehicle including, e.g., coordinate waypoints for predicted lanes in the environment of the vehicle, higher-level descriptions of the environment of the vehicle (e.g., "this is a 4 lane highway with a single lane exit on the far right"), and so on.

In some implementations, the prediction task can include an object detection task relating to predicting a state of objects on the exterior or in the interior of the vehicle. As an example, the query can include requests such as "Detect every object in 3D" and the output sequence can include text characterizing detected objects within the sensor data including, e.g., coordinate locations for the detected objects, bounding boxes specifying locations and extents of the detected objects, and so on. Such detection tasks can be performed in conjunction with filtering techniques that filter private or sensitive data from the observations generated by the sensor data.

The output sequence can include a natural language representation of the prediction. In particular, the output sequence can include a natural language rationale that explains the generated prediction. For example, in response to a request to describe the environment of the vehicle, the output sequence can include text such as "It is a cloudy day on a two-lane road with a slight bend where roadwork is being conducted ahead, partially obstructing the right lane". As a further example, in response to a request to determine a navigation plan for the vehicle, the output sequence can include text such as "Behavior Description: There is a traffic cone ahead on the righthand side of the road indicating a potential obstruction ahead, likely related to the roadwork visible further up the road. Interaction Strategy: Reduce speed gradually and prepare to merge safely into the left lane once it is clear of other vehicles and proceed with caution anticipating workers or debris in the roadway".

In some implementations, the token processing neural network can generate the output sequence using chain-of-thought reasoning by first processing the input token sequence to generate output tokens representing the rationale explaining the prediction and by then processing the input token sequence and the output tokens representing the rationale to generate the prediction. In particular, the token processing neural network can autoregressively generate the output sequence by first generating output tokens representing the rationale for the prediction and then generating output tokens representing the prediction as conditioned on the rationale for the prediction.

In some implementations, the rationale for the prediction can be hierarchically organized to provide an increasingly detailed explanation for the prediction. For example, the rationale can include a description of the driving environment (e.g., "The weather is clear and sunny, and it is daytime. The road is a four-lane undivided street with a crosswalk in the middle. There are cars parked on both sides of the street."), a description of relevant objects within the environment (e.g., "There is pedestrian at [9.01, 3.22] and vehicle at [11.58, 0.35].", a description of predicted behaviors and states of the relevant objects within the environment (e.g., "The pedestrian is currently standing on the sidewalk, looking toward the road, and maybe preparing to cross the street. The vehicle is currently ahead of me, moving in the same direction, and its future trajectory suggests it will continue straight."), and a high-level course of action (e.g., "I should keep my current low speed"). Generating the rationale for the prediction and generating the prediction as conditioned on the rationale can improve prediction performance for complex prediction tasks. Similarly, hierarchically generating the rationale can improve the rationale as a conditioning input for generating the prediction.

In some implementations, the output sequence can specify spatial locations within the environment of the vehicle, e.g., with reference to a coordinate system of the vehicle. For example, in response to a request to describe the environment and determine a navigation plan, the output sequence can include text such as "I am driving on a cloudy day on a two-lane road with a slight bend. Ahead, there is roadwork partially blocking the right lane. There is a traffic cone at location <X, Y> on the left-hand side of the road, indicating a potential obstruction. I should reduce speed and check if I can safely change lanes to the right. If not, I should prepare to stop.".

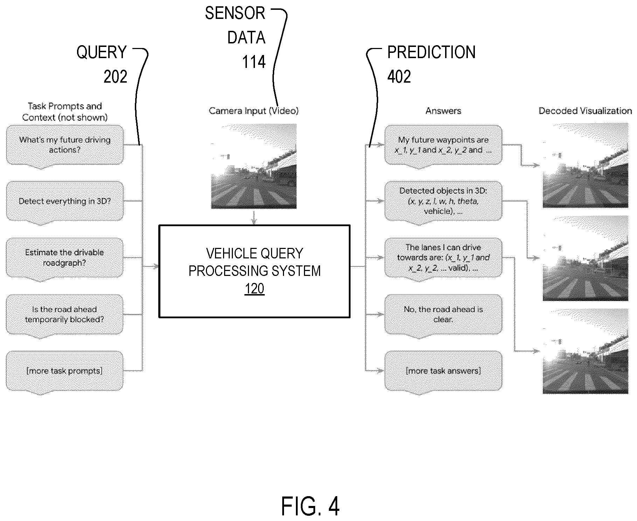

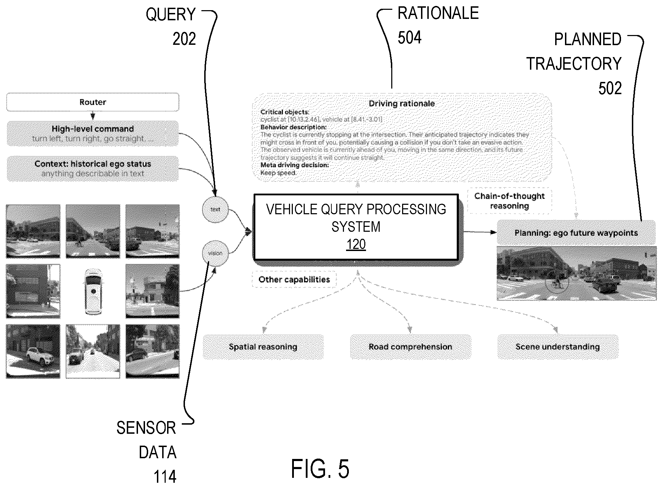

Examples of performing prediction tasks by processing input token sequences using the token processing neural network are illustrated below in FIG. 4 and FIG. 5.

The system can then provide the output prediction generated by the token processing neural network as a response to the received query (step 310). For example, the system can provide the output prediction used by sub-systems of the vehicle to perform tasks for the vehicle (e.g., by directly sending the output prediction to other systems of the vehicle when the system is on-board the vehicle, by transmitting the output prediction to the vehicle when the system is an offboard system, etc.). Example tasks for the vehicle that can be performed by processing the output prediction are described in more detail below with reference to FIG. 6.

FIG. 4 illustrates a variety of prediction tasks for a vehicle that can be performed by a vehicle query processing system 120.

As described above the vehicle query processing system 120 can process sensor data 114 for a vehicle and a query 202 to generate a prediction 402 regarding the vehicle, an environment of the vehicle, agents within the environment of the vehicle, and so on. In particular, the query 202 can include text data representing a request (e.g., text data characterizing a natural language request) to process the sensor data 114 to perform a particular prediction task for the vehicle.

For example, the query 202 can be "What are my future driving actions?" and the vehicle query processing system can generate a prediction 402 of the form "My future waypoints are x_1 y_1, x_2 y_2, ... ", where "x_1 y_1" and so on are 2D spatial locations for the vehicle. As another example, the query 202 can be "Detect everything in 3D" and the vehicle query processing system can generate the prediction 402 "Detected objects in 3D: (x,y,z,l,w,h,theta,vehicle), ...", where "(x,y,z,l,w,h,theta,vehicle)" specifies a location, extent, orientation, and classification for a bounding box of a detected vehicle. As another example, the query 202 can be "Estimate a drivable road graph" and the vehicle query processing system 120 can generate the prediction 402 "The lanes I can drive towards are (x_1 y_1, x_2 y_2, ..., valid), ...", where "(x_1 y_1, x_2 y_2, ..., valid)" specifies spatial locations defining a lane in the environment of the vehicle. As another example, the query 202 can be "Is the road ahead temporarily blocked?" and the vehicle query processing system 120 can generate the prediction 402 "No, the road ahead is clear".

FIG. 5 illustrates performing a prediction task for a vehicle using a vehicle query processing system 120. In particular, FIG. 5 illustrates processing sensor data 114 for the vehicle and a query 202 to generate planned trajectory 502 for the vehicle.

As illustrated in FIG. 5, the query 202 can include high level navigation commands for the planned trajectory (e.g., "turn left", "turn right", "go straight", etc.) and can include additional context data for the prediction task (e.g., previous locations and trajectories of the vehicle).

As illustrated in FIG. 5, the vehicle query processing system can generate a rationale 504 explaining the planned trajectory 502. In particular, the vehicle query processing system can generate the rationale 504 as part of performing chain-of-thought reasoning to generate the planned trajectory 502 (e.g., by first processing the sensor data 114 and the query 202 to generate the rationale 504 for the planned trajectory 502 and then by processing the sensor data 114, the query 202, and the rationale 504 to generate the planned trajectory 502). For example, as illustrated in FIG. 5, the vehicle query processing system 120 can generate the rationale 504 "Critical objects: cyclist at [10.13, 2.46], vehicle at [8.41, -3.01]. Behavior description: The cyclist is currently stopping at the intersection. Their anticipated trajectory indicates they might cross in front of you, potentially causing a collision if you don't take an evasive action. The observed vehicle is currently ahead of you, moving in the same direction, and its future trajectory suggests it will continue straight. Meta driving decision: Keep speed."

FIG. 6 is a flow diagram of an example process 600 for performing a driving task for a vehicle by processing sensor data for the vehicle using a vehicle query processing system. For convenience, the process 600 will be described as being performed by a system of one or more computers located in one or more locations. For example, an on-board system of the vehicle, e.g., the on-board system 110 of FIG. 1A, appropriately programmed in accordance with this specification, can perform the process 600.

The system can obtain observations of sensor data that characterize a driving environment for the vehicle and a query representing a request to perform a prediction task (step 602). For example, the observations can be observations of, e.g., point-cloud data obtained by LIDAR sensors of the vehicle, RADAR data obtained by the RADAR sensors of the vehicle, and so on.

The system can obtain the query for the prediction task from any of a variety of sources. As one example, the query can be generated by another subsystem of the vehicle (e.g., a navigation system of the vehicle, a user interface sub-system of the vehicle, etc.). As another example, the system can receive the query as transmitted to the vehicle by an off-board system (e.g., an off-board system configured to remotely monitor the vehicle).

The system can process the query and the observations of sensor data using the vehicle query processing system to generate an output for the prediction task (step 604). The vehicle query processing system can process the query and the observations of sensor data to generate an output sequence of tokens representing the output prediction for the prediction task following the process 300 of FIG. 3.

In some implementations, the vehicle query processing system can be an on-board subsystem of the vehicle. In other implementations, the vehicle query processing system can be part of an off-board system. The system can transmit (e.g., using an on-board communication system of the vehicle) the query and the observations of sensor data to the off-board system and can receive (e.g., using the on-board communication system of the vehicle) the output for the prediction task as generated by the off-board system processing the query and the observations of sensor data using the off-board vehicle query processing system. The off-board system can transmit a variety of outputs for the prediction task to the vehicle. For example, in some implementations, the off-board system can transmit the output token sequence as generated by the off-board vehicle query processing system as the output for the prediction task. As another example, in some implementations, the off-board system can process the output token sequence (e.g., using an off-board planning system) to generate one or more commands for the vehicle and can transmit the generated commands to the vehicle as the output for the prediction task.

The system can process the output for the prediction task to perform the driving task for the vehicle (step 606). The system can process the output for the prediction task using various on-board sub-systems of the vehicle (e.g., a planning system of the vehicle, a user interface system of the vehicle, etc.) to perform any of a variety of driving tasks for the vehicle.

For example, the system can process the output for the prediction task using a navigation system of the vehicle to determine one or more planned control inputs for the vehicle. The planned control inputs can be used to control the vehicle (e.g., to perform a navigation task for the vehicle within the driving environment for the vehicle). As another example, the system can process the output for the prediction task using a user interface system of the vehicle to, e.g., provide information to a user of the vehicle regarding the driving environment of the vehicle based on the output prediction, warn a user of the vehicle about unsafe driving conditions based on the output prediction, and so on.

FIG. 7 is a flow diagram of an example process 700 for training a vehicle query processing system. For convenience, the process 700 will be described as being performed by a system of one or more computers located in one or more locations. For example, a training engine, e.g., the training engine 136 of FIG. 1A, appropriately programmed in accordance with this specification, can perform the process 700.

The system can obtain training data for the vehicle query processing system (step 702). The training data can include training examples for each of a plurality of prediction tasks. Each training example can include data characterizing: (i) example sensor data (e.g., example image data, example point-cloud LIDAR data, example RADAR data, etc.) for the training example, (ii) an example query for the training example representing a request to perform the prediction task for the training example, and (iii) a target prediction for the training example. The target prediction for each training example can be a target output token sequence for the training example.

The training data for the vehicle query processing system can include training examples for any of a variety of prediction tasks, such as generating planned trajectory of the example vehicle through example driving environments, predicting states of example vehicles predicting states of example objects on exteriors or in interiors of example vehicles, generating predictions characterizing example driving environments of example vehicle, generating predictions characterizing example objects (e.g., predicting behaviors, locations, bounding boxes, and so on for the example objects) in example driving environments of example vehicles. For some or all of the training examples, the prediction task for the training example can include generating a rationale explaining the prediction for the training example.

For some or all of the training examples, the target prediction for the training example can specify one or more spatial locations in the example driving environment of the example vehicle for the training example (e.g., with reference to a coordinate system of the vehicle). For example, when the prediction task for a training example includes generating a prediction characterizing an example object, the target prediction for the training example can specify a predicted location of the example object. To better train the spatial reasoning of the vehicle query processing system, each training example can specify one or more spatial locations in the example driving environment for the training example, such as spatial locations specifying a planned trajectory for the example vehicle, spatial locations for example objects (e.g., predicted positions, bounding boxes, trajectories, etc.) in the example driving environment, spatial locations of predicted lanes in the example driving environment, and so on.

In some implementations, the plurality of prediction tasks can include certain prediction tasks that are not expected to be prediction tasks performed by the vehicle query processing system after the vehicle query processing system is trained, but can improve performance on other processing tasks. As an example, to help train the spatial reasoning of the vehicle query processing system, the training data for the vehicle query processing system can include training examples regarding predicting locations and trajectories for objects that are un-related to the navigation of the vehicle.

The system can train the vehicle query processing system over a sequence of training iterations. At each training iteration, the system can perform steps 704 through 710.

The system can process the example sensor data and example queries for one or more training examples for the training iteration using the vehicle query processing system to generate network outputs for the training examples for the training iteration (step 704). In particular, as described in more detail above with reference to step 306 of FIG. 3, the system can process the example sensor data and example query for each training example using encoder neural networks of the vehicle query processing system to generate an input token sequence for a token processing neural network of the vehicle query processing system. For each training example, the system can process the input token sequence using the token processing neural network to determine a likelihood of the token processing neural network generating the target output token sequence for the training example. For example, the system can determine the likelihood of the token processing neural network auto-regressively generating each output token of the target output token sequence by processing a network input that includes the input token sequence for the training example and previous output tokens within the target output token sequence.

The system can evaluate an objective function for the observation encoding system based on the target predictions of the training examples for the training iteration (step 706). For example, the objective function for the vehicle query processing system can measure, for each training example of the training data for the token processing neural network, a likelihood of generating the target prediction for the training example by processing the example sensor data and the example query for the training example using the vehicle query processing system. For example, the objective function for the vehicle query processing system can be the likelihood of the token processing neural network generating the target output token sequence for each training example when processing the input token sequence for the training example.

The system can update parameters of the vehicle query processing system to optimize the objective function (step 708). The system can update the parameters of the vehicle query processing system (e.g., parameters of the token processing neural network, parameters of the encoder neural networks, and so on) using any appropriate machine learning technique. For example, the system can determine gradients of the objective function with respect to the parameters of the vehicle query processing system and can determine updates for the parameters using, e.g., stochastic gradient descent, ADAM, and so on.

The system can determine whether the training is complete (step 710). The system can use any of a variety of criteria to determine whether the training is complete. For example, the system can determine that the training is complete after a pre-determined number of training iterations. As another example, the system can determine that the training is complete when a value of the objective function falls below a pre-determined threshold. As another example, the system can determine that the training is complete when a difference between values of the objective function for the current training iteration and a previous training iteration falls below a pre-determined threshold.

If the system determines that training is not complete, the system can continue to a next training iteration (e.g., return to step 704)

When the system determines that training is complete, the system can provide the trained vehicle processing system (step 712). In some implementations, to reduce complexity, the system can generate and provide a distillation of the trained vehicle query processing system by generating distillations of the token processing neural network and the encoder neural networks, as described in more detail below with reference to FIG. 9.

FIG. 8 is a flow diagram of an example process 800 for pre-training an encoder neural network for a sensor modality. For convenience, the process 800 will be described as being performed by a system of one or more computers located in one or more locations. For example, a training engine, e.g., the training engine 136 of FIG. 1A, appropriately programmed in accordance with this specification, can perform the process 800.

The system can obtain training data for the encoder neural network (step 802). The training data can include a plurality of training examples for the encoder neural network.

Each training example can include an example observation of sensor data for the sensor modality. For example, the example observations can be observations of, e.g., image data obtained by camera sensors, point-cloud data obtained by LIDAR sensors, RADAR data obtained by RADAR sensors, and so on.

Each training example can include an example caption (e.g., an example text description) for the example observation of the training example. As an example, the example captions can be natural language text descriptions for the example observations. As another example, the example captions can be token sequences representing natural language text descriptions for the example observations (e.g., token sequences generated by a text encoding network, such as the query encoding network 212 of FIG. 2, processing the text descriptions).

The system can pre-train the encoder neural network over a sequence of training iterations. At each training iteration, the system can perform steps 804 through 810.

The system can process the example observations using the encoder neural network to generate token sequences representing the example observations (step 804). For example, the encoder neural network can process the example observations to generate the token sequences representing the example observations as described in more detail above with reference to step 306 of FIG. 3.

The system can evaluate a pre-training objective function for the encoder neural network using the generated token sequences (step 806). The pre-training objective function for the encoder neural network can measure an agreement between (i) the generated token sequences representing the example observations and (ii) the example captions for the example observations.

For example, in some implementations, the pre-training objective function can include a contrastive loss that measures a similarity between (i) embeddings of the generated token sequences for the example observations and (ii) embeddings of the token sequences for the corresponding example captions for the example observations. The embeddings for the token sequences for the example observations and the example captions can be, e.g., embeddings generated by processing the token sequences using an embedding neural network, individual tokens (e.g., class tokens) from the token sequences, and so on.

As an example, the system can determine a similarity score, $S(x, y)$ between an embedding for an example observation, $x$, and an embedding for an example caption, $y$, following:

$$S(x,y) = x \cdot y$$

As another example, the system can determine the similarity score, $S(x, y)$ between an embedding for an example observation, $x$, and an embedding for an example caption, y, following:

$$S(x,y) = f_\theta^T(x)\, W g_\theta(y)$$

Where $f_\theta$ and $g_\theta$ are machine-learned vector functions (e.g., as parameterized by respective neural networks) and $W$ is a machine learned matrix.

For each example observation, training examples for the training iteration can include a "positive" text caption associated with the example observation (e.g., a text caption representing a correct description for the example observation) and one or more "negative" text captions that are not associated with the example observation. In particular, the negative text captions for each example observation for the training examples of the training iteration can be the positive task embeddings representing correct predictions or classifications for the other example observations for the training examples of the training iteration.

The contrastive loss can reward similarity scores for positive text captions and can penalize similarity scores for negative text captions. For example, the contrastive loss for an embedding of an observation x can be determined following:

$$\mathcal{L}(x) = -log \frac{e^{S(x,y^+)}}{e^{S(x,y^+)} + \sum_i e^{S(x,y_i^-)}}$$

Where $S(x, y)$ denotes the similarity score for the observation embedding $x$ and text caption embedding $y$, $y^+$ is a positive text caption for the observation embedding $x$, and each $y_i$ is a negative text caption for the observation embedding $x$. Other examples of contrastive losses are described by Oord et al. in "Representation Learning with Contrastive Predictive Coding", Radford et al. in "Learning Transferable Visual Models from Natural Language Supervision", and Yu et al. in "CoCa: Contrastive Captioners are Image-Text Foundation Models".

By including a contrastive loss based on the similarity scores between the example observations and the example text captions, the pre-training objective function can encourage the encoder neural network to generate token sequences for the observations that (i) are similar to the token sequences for text captions that are associated with the observations and (ii) are dissimilar to the token sequences for text captions that are not associated with the observations.

As another example, in some implementations, the pre-training objective function can include a caption loss that measures a likelihood of a caption system generating the example captions by processing the corresponding observation embeddings.

The caption system can be, e.g., a language model configured to auto-regressively generate output token sequences representing output captions as conditioned on the token sequences for the example observations. As a particular example, the caption system can be a token processing neural network of a vehicle query processing system with which the encoder neural network can be jointly fine-tuned after pre-training the encoder neural network.

The system can update parameters of the encoder neural network to optimize the pre-training objective function (step 808). The system can update the parameters of the encoder neural network using any appropriate machine learning technique. For example, the system can determine gradients of the pre-training objective function with respect to the parameters of the encoder neural network and can determine updates for the parameters using, e.g., stochastic gradient descent, ADAM, and so on.

The system can determine whether the pre-training is complete (step 810). The system can use any of a variety of criteria to determine whether the training is complete. For example, the system can determine that pre-training is complete after a pre-determined number of training iterations. As another example, the system can determine that pre-training is complete when a value of the pre-training objective function falls below a pre-determined threshold. As another example, the system can determine that pre-training is complete when a difference between values of the pre-training objective function for the current training iteration and a previous training iteration falls below a pre-determined threshold.

If the system determines that pre-training is not complete, the system can continue to a next training iteration (e.g., return to step 804)

When the system determines that pre-training is complete, the system can provide the pre-trained encoder neural network (step 812). After pre-training, the encoder neural network can be jointly fine-tuned with a token processing neural network as part of training a vehicle query processing system as described above with reference to FIG 5.

FIG. 9 is a flow diagram of an example process 900 for distilling an initial neural network to generate a simpler, distilled neural network. For convenience, the process 900 will be described as being performed by a system of one or more computers located in one or more locations. For example, a training engine, e.g., the training engine 136 of FIG. 1A, appropriately programmed in accordance with this specification, can perform the process 900.

The system can obtain training data for the distilled neural network (step 902). The training data can include a plurality of training examples for the distilled neural network. Each training example for the distilled neural network can include data characterizing (i) an example network input for the training example and (ii) a target network output for the training example. The target network output for each training example can be generated by processing the example network input for the training example using the initial neural network.

For example, the initial neural network can be a query processing neural network and each training example for the distilled neural network can include data characterizing (i) an example query for the training example and (ii) a target token sequence representing the example query for the training example. As another example, the initial neural network can be an observation encoder neural network and each training example for the distilled neural network can include data characterizing (i) an example observation sensor data for the training example and (ii) a target token sequence representing the example observation for the training example. As another example, the initial neural network can be a token processing neural network and each training example for the distilled neural network can include data characterizing (i) an example input token sequence for the training example (e.g., representing example sensor data and an example query for the training example) and (ii) a target output token sequence for the training example (e.g., representing a target prediction for the training example).

The system can train the distilled neural network over a sequence of training iterations. At each training iteration, the system can perform steps 904 through 910.

The system can process the example network inputs using the distilled neural network to generate network outputs for the training examples (step 904). As one example, the system can process the example network inputs using the distilled neural network to generate output token sequences for the training examples. As another example, the system can process the example network input for each training example using the distilled neural network to determine a likelihood of the distilled neural network generating the target network output for the training example. As a further example, the system can determine the likelihood of the distilled neural network auto-regressively generating each output token of a target output token sequence by processing the example network input for the training example and the previous output tokens within the target output token sequence.

The system can evaluate a distillation objective function for the observation encoding system based on the target network outputs for the training examples (step 906). The distillation objective function can measure a similarity between network outputs produced by the initial neural network and network outputs produced by the distilled neural network when processing the same network inputs.

As an example, for each output token of each example output token sequence, the distillation objective function can measure a Kullback-Liebler divergence between likelihoods for values of the output token as determined by the distilled neural network and by the initial neural network.

As another example, for each training example, the distillation objective function can measure the likelihood of the distilled neural network generating the target output token sequence for the training example (e.g., as generated by the initial neural network) by processing the example network input for the training example.

The system can update parameters of the distilled neural network to optimize the distillation objective function (step 908). The system can update the parameters of the distilled neural network using any appropriate machine learning technique. For example, the system can determine gradients of the distillation objective function with respect to the parameters of the distilled neural network and can determine updates for the parameters using, e.g., stochastic gradient descent, ADAM, and so on.

The system can determine whether the distillation is complete (step 910). The system can use any of a variety of criteria to determine whether the distillation is complete. For example, the system can determine that the distillation is complete after a pre-determined number of training iterations. As another example, the system can determine that the distillation is complete when a value of the distillation objective function falls below a pre-determined threshold. As another example, the system can determine that the distillation is complete when a difference between values of the distillation objective function for the current training iteration and a previous training iteration falls below a pre-determined threshold.

If the system determines that the distillation is not complete, the system can continue to a next training iteration (e.g., return to step 904)

When the system determines that the distillation is complete, the system can provide the trained distilled neural network (step 912).

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, or a Jax framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

In addition to the embodiments described above, the following embodiments are also innovative:

Embodiment 1 is a method performed by one or more computers, comprising:

receiving sensor data comprising one or more observations of a driving environment of a vehicle;
receiving a query regarding the driving environment of the vehicle;
processing the received sensor data and the received query to generate a network input comprising a plurality of input tokens; and

processing the network input using a token processing neural network to generate an output token sequence that represents a response to the received query regarding the driving environment.

Embodiment 2 is the method of embodiment 1, wherein:

the plurality of input tokens comprises, for each of the one or more observations of the driving environment of the vehicle, one or more sequences of sensor tokens representing the observation; and

processing the received sensor data and the received query to generate the network input comprises:

processing each of the one or more observations of the driving environment of the vehicle to generate the sequences of sensor tokens representing the one or more observations.

Embodiment 3 is the method of embodiment 2, wherein:

the sensor data comprises observations for each of one or more sensor modalities of the vehicle; and processing each of the one or more observations of the driving environment of the vehicle to generate the sequences of sensor tokens representing the one or more observations comprises, for each of the one or more sensor modalities for the vehicle:

processing, for each observation for the sensor modality and for each of one or more encoder neural networks for the sensor modality, the observation using the encoder neural network for the sensor modality to generate a respective sequence of sensor tokens representing the observation.

Embodiment 4 is the method of embodiment 3, wherein:

the one or more sensor modalities of the vehicle include LIDAR sensor data obtained by LIDAR sensors of the vehicle; and

processing each of the one or more observations of the driving environment of the vehicle to generate the sequences of sensor tokens representing the one or more observations further comprises, for each observation of LIDAR sensor data and for each of one or more LIDAR encoder neural networks:

processing the observation of LIDAR sensor data using the LIDAR encoder neural network to generate a respective sequence of sensor tokens representing the observation of LIDAR sensor data.

Embodiment 5 is the method of embodiment 3 or embodiment 4, wherein:

the one or more sensor modalities of the vehicle include image data obtained by cameras of the vehicle; and

processing each of the one or more observations of the driving environment of the vehicle to generate the sequences of sensor tokens representing the one or more observations further comprises, for each observation of image data and for each of one or more image encoder neural networks:

processing the observation of image data using the image encoder neural network to generate a respective sequence of sensor tokens representing the observation of image data.

Embodiment 6 is the method of any one of embodiments 2-5, wherein:

the network input comprises an input sequence of input tokens; and

processing the received sensor data and the received query to generate the network input comprises:

processing the received query using a query encoder neural network to generate the input sequence of input tokens.

Embodiment 7 is the method of embodiment 6, wherein:

the received query comprises a text input; and processing the received query using the query encoder neural network to generate the input sequence of input tokens comprises:

processing the text input using a text encoder neural network to generate the input sequence of input tokens.

Embodiment 8 is the method of embodiment 6 or embodiment 7, wherein processing the received sensor data and the received query to generate the network input further comprises:

including, within the input sequence of input tokens, some or all of the sensor tokens representing the one or more observations of the driving environment of the vehicle.

Embodiment 9 is the method of any one of embodiments 6-8, wherein:

the token processing neural network comprises a sequence of one or more attention layers, wherein each attention layer is configured to perform a respective attention operation; and

processing the network input using the token processing neural network to generate the output token sequence comprises:

processing the input sequence of input tokens using the sequence of one or more attention layers to generate the output token sequence.

Embodiment 10 is the method of embodiment 9, wherein the sequence of one or more attention layers comprises one or more cross-attention layers, wherein each cross-attention layers is configured to perform a respective cross-attention operation between (i) a layer input and (ii) a context sequence of input tokens comprising some or all of the sensor tokens representing the one or more observations of the driving environment of the vehicle.

Embodiment 11 is the method of any one of embodiments 1-10, wherein the received query comprises data characterizing one or more navigation commands for the vehicle.

Embodiment 12 is the method of any one of embodiments 1-11, wherein:

the received query comprises data characterizing a request to perform a particular prediction task; and the output token sequence comprises data characterizing a prediction for the particular prediction task.

Embodiment 13 is the method of any one of embodiments 1-12, further comprising:

processing the output token sequence using a planning sub-system of the vehicle to generate one or more control inputs for the vehicle; and controlling the vehicle using the one or more control inputs.

Embodiment 14 is the method of any one of embodiments 1-13, wherein receiving the sensor data comprises receiving the sensor data as transmitted by the vehicle.

Embodiment 15 is the method of embodiment 14, wherein receiving the query comprises receiving the query as transmitted by the vehicle.

Embodiment 16 is the method of embodiment 14 or embodiment 15, further comprising transmitting the output token sequence to the vehicle.

Embodiment 17 is the method of any one of embodiments 14-16, further comprising: transmitting, to the vehicle, the response to the received query regarding the driving environment represented by the output token sequence.

Embodiment 18 is the method of any one of embodiments 14-17, further comprising:

processing the output token sequence to generate one or more commands for the vehicle; and

transmitting the one or more commands to the vehicle.

Embodiment 19 is one or more non-transitory computer storage media storing instructions that when executed by one or more computers cause the one or more computers to perform operations of the respective method of any one of embodiments 1-18.

Embodiment 20 is a system comprising:

one or more computers; and one or more storage devices communicatively coupled to the one or more computers, wherein the one or more storage devices store instructions that, when executed by the one or more computers, cause the one or more computers to perform operations of the respective method of any one of embodiments 1-18.

Embodiment 21 is a method performed by one or more computers, comprising:

obtaining training data comprising a plurality of training examples, wherein each training example comprises (i) example sensor data comprising one or more observations of a driving environment of an example vehicle for the training example, (ii) an example query for the training example, and (iii) a target prediction for the training example; processing the example sensor data and the example query for each training example to generate a respective network input comprising a plurality of input tokens for each training example; and training a token processing neural network to optimize a likelihood of the token processing neural network generating the target predictions for the training examples by processing the corresponding network inputs.

Embodiment 22 is the method of embodiment 21, wherein, for each of one or more training examples, the target prediction for the training example specifies a spatial location in the driving environment of the example vehicle for the training example.

Embodiment 23 is the method of embodiment 22, wherein, for each of the one or more training examples, the target prediction for the training example specifies the spatial location in the driving environment of the example vehicle for the training example with reference to a coordinate system of the example vehicle for the training example.

Embodiment 24 is the method of any one of embodiments 21-23, wherein, for each training example:

the example query for the training example comprises data characterizing a request to perform a particular prediction task for the training example; and the target prediction for the training example comprises a target prediction for the particular prediction task for the training example.

Embodiment 25 is the method of embodiment 24, wherein, for each of one or more training examples, the particular prediction task for the training example includes generating a planned trajectory of the example vehicle for the training example.

Embodiment 26 is the method of embodiment 24 or embodiment 25, wherein, for each of one or more training examples, the particular prediction task for the training example includes predicting a state of the example vehicle for the training example.

Embodiment 27 is the method of any one of embodiments 24-26, wherein, for each of one or more training examples, the particular prediction task for the training example includes predicting a state of one or more objects on an exterior or in an interior of the example vehicle for the training example.

Embodiment 28 is the method of any one of embodiments 24-27, wherein, for each of one or more training examples, the particular prediction task for the training example includes generating a prediction characterizing the driving environment of the example vehicle for the training example.

Embodiment 29 is the method of any one of embodiments 24-28, wherein, for each of one or more training examples, the particular prediction task for the training example includes generating a prediction characterizing an object in the driving environment of the example vehicle for the training example.

Embodiment 30 is the method of embodiment 29, wherein generating the prediction characterizing the object in the driving environment of the example vehicle for the training example comprises predicting a behavior of the object in the driving environment of the example vehicle for the training example.

Embodiment 31 is the method of embodiment 29 or embodiment 30, wherein the prediction characterizing the object in the driving environment of the example vehicle for the training example includes a predicted location for the object in the driving environment of the example vehicle for the training example.

Embodiment 32 is the method of any one of embodiments 29-31, wherein the prediction characterizing the object in the driving environment of the example vehicle for the training example includes a predicted bounding box specifying a location and spatial extent for the object in the driving environment of the example vehicle for the training example.

Embodiment 33 is the method of any one of embodiments 24-32, wherein, for each of one or more training examples, the particular prediction task for the training example includes generating a rationale explaining a prediction for the training example.

Embodiment 34 is the method of any one of embodiments 24-33, wherein the training data includes training examples for a plurality of prediction tasks.

Embodiment 35 is the method of any one of embodiments 1-34, wherein, for each training example:

the plurality of input tokens for the training example comprises, for each of the one or more observations of the driving environment of the example vehicle for the training example, one or more sequences of sensor tokens representing the observation; and processing the example sensor data and the example query for the training example to generate the network input for the training example comprises: processing each of the one or more observations of the driving environment of the example vehicle for the training example to generate the sequences of sensor tokens representing the one or more observations.

Embodiment 36 is the method of any one of embodiments 1-35, wherein, for each training example:

the example sensor data for the training example comprises observations for each of one or more sensor modalities of the example vehicle for the training example; and
processing each of the one or more observations of the driving environment of the example vehicle for the training example to generate the sequences of sensor tokens representing the one or more observations comprises, for each of the one or more sensor modalities for the example vehicle:
processing, for each observation for the sensor modality and for each of one or more encoder neural networks for the sensor modality, the observation using the encoder neural network for the sensor modality to generate a respective sequence of sensor tokens representing the observation.

Embodiment 37 is the method of any one of embodiments 1-36, further comprising, after training the token processing neural network:

receiving sensor data comprising one or more observations of a driving environment of a vehicle;
receiving a query regarding the driving environment of the vehicle;
processing the received sensor data and the received query to generate a network input comprising a plurality of input tokens; and
processing the network input using the token processing neural network to generate an output token sequence that represents a response to the received query regarding the driving environment.

Embodiment 38 is one or more non-transitory computer storage media storing instructions that when executed by one or more computers cause the one or more computers to perform operations of the respective method of any one of embodiments 21-37.

Embodiment 39 is a system comprising:

one or more computers; and
one or more storage devices communicatively coupled to the one or more computers, wherein the one or more storage devices store instructions that, when executed by the one or more computers, cause the one or more computers to perform operations of the respective method of any one of embodiments 21-37.

Embodiment 40 is a computer program product comprising instructions which, when executed by one or more processors, cause the processors to perform the method of any one of embodiments 1-18.

Embodiment 41 is computer-executable instructions which, when executed by one or more processors, cause the processors to perform the method of any one of embodiments 1-18.

Embodiment 42 is a computer program product comprising instructions which, when executed by one or more processors, cause the processors to perform the method of any one of embodiments 21-37.

Embodiment 43 is computer-executable instructions which, when executed by one or more processors, cause the processors to perform the method of any one of embodiments 21-37.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A method performed by one or more computers, comprising:

   receiving sensor data comprising one or more observations of a driving environment of a vehicle;
   receiving a query regarding the driving environment of the vehicle;
   processing the received sensor data and the received query to generate a network input comprising a plurality of input tokens; and
   processing the network input using a token processing neural network to generate an output token sequence that represents a response to the received query regarding the driving environment.

2. The method of claim 1, wherein:

   the plurality of input tokens comprises, for each of the one or more observations of the driving environment of the vehicle, one or more sequences of sensor tokens representing the observation; and
   processing the received sensor data and the received query to generate the network input comprises:
   processing each of the one or more observations of the driving environment of the vehicle to generate the sequences of sensor tokens representing the one or more observations.

3. The method of claim 2, wherein:

   the sensor data comprises observations for each of one or more sensor modalities of the vehicle; and
   processing each of the one or more observations of the driving environment of the vehicle to generate the sequences of sensor tokens representing the one or more observations comprises, for each of the one or more sensor modalities for the vehicle:
   processing, for each observation for the sensor modality and for each of one or more encoder neural networks for the sensor modality, the observation using the encoder neural network for the sensor modality to generate a respective sequence of sensor tokens representing the observation.

4. The method of claim 3, wherein:

   the one or more sensor modalities of the vehicle include LIDAR sensor data obtained by LIDAR sensors of the vehicle; and
   processing each of the one or more observations of the driving environment of the vehicle to generate the sequences of sensor tokens representing the one or more observations further comprises, for each observation of LIDAR sensor data and for each of one or more LIDAR encoder neural networks:
   processing the observation of LIDAR sensor data using the LIDAR encoder neural network to generate a respective sequence of sensor tokens representing the observation of LIDAR sensor data.

5. The method of claim 3 or claim 4, wherein:

   the one or more sensor modalities of the vehicle include image data obtained by cameras of the vehicle; and
   processing each of the one or more observations of the driving environment of the vehicle to generate the sequences of sensor tokens representing the one or more observations further comprises, for each observation of image data and for each of one or more image encoder neural networks:

processing the observation of image data using the image encoder neural network to generate a respective sequence of sensor tokens representing the observation of image data.

6. The method of any one of claims 2-5, wherein:

the network input comprises an input sequence of input tokens; and
processing the received sensor data and the received query to generate the network input comprises:
processing the received query using a query encoder neural network to generate the input sequence of input tokens.

7. The method of claim 6, wherein:

the received query comprises a text input; and
processing the received query using the query encoder neural network to generate the input sequence of input tokens comprises:
processing the text input using a text encoder neural network to generate the input sequence of input tokens; and/or
wherein processing the received sensor data and the received query to generate the network input further comprises:
including, within the input sequence of input tokens, some or all of the sensor tokens representing the one or more observations of the driving environment of the vehicle.

8. The method of any one of claim 6 or claim 7, wherein:

the token processing neural network comprises a sequence of one or more attention layers, wherein each attention layer is configured to perform a respective attention operation; and
processing the network input using the token processing neural network to generate the output token sequence comprises:
processing the input sequence of input tokens using the sequence of one or more attention layers to generate the output token sequence.

9. The method of claim 8, wherein the sequence of one or more attention layers comprises one or more cross-attention layers, wherein each cross-attention layers is configured to perform a respective cross-attention operation between (i) a layer input and (ii) a context sequence of input tokens comprising some or all of the sensor tokens representing the one or more observations of the driving environment of the vehicle.

10. The method of any one of claims 1-9,

wherein the received query comprises data characterizing one or more navigation commands for the vehicle; and/or
wherein the received query comprises data characterizing a request to perform a particular prediction task, and the output token sequence comprises data characterizing a prediction for the particular prediction task; and/or
the method further comprising:

processing the output token sequence using a planning sub-system of the vehicle to generate one or more control inputs for the vehicle; and
controlling the vehicle using the one or more control inputs.

11. The method of any one of claims 1-10, wherein receiving the sensor data comprises receiving the sensor data as transmitted by the vehicle.

12. The method of claim 11, wherein receiving the query comprises receiving the query as transmitted by the vehicle.

13. The method of claim 11 or claim 12, further comprising:

transmitting the output token sequence to the vehicle; and/or
transmitting, to the vehicle, the response to the received query regarding the driving environment represented by the output token sequence; and/or
processing the output token sequence to generate one or more commands for the vehicle, and
transmitting the one or more commands to the vehicle.

14. One or more non-transitory computer storage media storing instructions that when executed by one or more computers cause the one or more computers to perform operations of the respective method of any one of claims 1-13.

15. A system comprising:

one or more computers; and
one or more storage devices communicatively coupled to the one or more computers, wherein the one or more storage devices store instructions that, when executed by the one or more computers, cause the one or more computers to perform operations of the respective method of any one of claims 1-13.

FIG. 1A

FIG. 1B

# VEHICLE QUERY PROCESSING SYSTEM 120

**ENCODER SYSTEM 204**

QUERY ENCODER NEURAL NETWORK 212

OBSERVATION ENCODER NEURAL NETWORK 214-A

OBSERVATION ENCODER NEURAL NETWORK 214-N

QUERY 202

SENSOR DATA 114

INPUT SEQUENCE 208

CONTEXT SEQUENCE 216

TOKEN PROCESSING NEURAL NETWORK 206

OUTPUT SEQUENCE 210

FIG. 2

300

RECEIVE SENSOR DATA FOR OBSERVATIONS OF
DRIVING ENVIRONMENT OF VEHICLE ⟋302

RECEIVE INPUT QUERY CHARACTERIZING
REQUEST TO PERFORM PREDICTION TASK ⟋304

PROCESS SENSOR DATA AND INPUT QUERY TO
GENERATE NETWORK INPUT ⟋306

PROCESS NETWORK INPUT USING TOKEN
PROCESSING NEURAL NETWORK TO GENERATE
OUTPUT PREDICTION ⟋308

PROVIDE OUTPUT PREDICTION
AS RESPONSE TO INPUT QUERY ⟋310

FIG. 3

SENSOR
DATA
114

QUERY
202

PREDICTION
402

Task Prompts and
Context (not shown)

Camera Input (Video)

Answers

Decoded Visualization

What's my future driving
actions?

Detect everything in 3D?

Estimate the drivable
roadgraph?

Is the road ahead
temporarily blocked?

[more task prompts]

VEHICLE QUERY
PROCESSING SYSTEM
120

My future waypoints are
$x\_1, y\_1$ and $x\_2, y\_2$ and ...

Detected objects in 3D:
$(x, y, z, l, w, h, theta,$
vehicle), ...

The lanes I can drive
towards are: $(x\_1, y\_1$ and
$x\_2, y\_2, ...$ valid), ...

No, the road ahead is
clear.

[more task answers]

FIG. 4

FIG. 5

600

OBTAIN SENSOR DATA AND QUERY
CHARACTERIZING REQUEST TO PERFORM
PREDICTION TASK — 602

PROCESS SENSOR DATA AND QUERY USING
VEHICLE QUERY PROCESSING SYSTEM TO
GENERATE OUTPUT FOR PREDICTION TASK — 604

PROCESS OUTPUT PREDICTION TO PERFORM
DRIVING TASK — 606

FIG. 6

700

```
┌─────────────────────────────────────────┐
│  OBTAIN TRAINING DATA FOR VEHICLE QUERY  │  ⟲ 702
│           PROCESSING SYSTEM              │
└─────────────────────────────────────────┘
                    │
                    ▼
┌─────────────────────────────────────────┐
│  PROCESS EXAMPLE SENSOR DATA AND QUERIES │  ⟲ 704
│    USING VEHICLE QUERY PROCESSING SYSTEM │
└─────────────────────────────────────────┘
                    │
                    ▼
┌─────────────────────────────────────────┐
│   EVALUATE OBJECTIVE FUNCTION BASED ON   │  ⟲ 706
│        TARGET NETWORK OUTPUTS            │
└─────────────────────────────────────────┘
                    │
                    ▼
┌─────────────────────────────────────────┐
│ UPDATE VEHICLE QUERY PROCESSING SYSTEM TO│  ⟲ 708
│      OPTIMIZE OBJECTIVE FUNCTION         │
└─────────────────────────────────────────┘
                    │
                    ▼
        NO  ⟨  TRAINING COMPLETE?  ⟩  ⟲ 710
                    │
                   YES
                    ▼
┌─────────────────────────────────────────┐
│           PROVIDE TRAINED                │  ⟲ 712
│   VEHICLE QUERY PROCESSING SYSTEM        │
└─────────────────────────────────────────┘
```

FIG. 7

800

OBTAIN TRAINING DATA FOR
ENCODER NEURAL NETWORK — 802

PROCESS EXAMPLE OBSERVATIONS USING
ENCODER NEURAL NETWORK TO GENERATE
TOKEN SEQUENCES FOR EXAMPLE OBSERVATIONS — 804

EVALUATE PRE-TRAINING OBJECTIVE FUNCTION
BASED ON GENERATED TOKEN SEQUENCES — 806

UPDATE ENCODER NEURAL NETWORK TO
OPTIMIZE PRE-TRAINING OBJECTIVE FUNCTION — 808

NO
PRE-TRAINING COMPLETE? — 810

YES

PROVIDE PRE-TRAINED
ENCODER NEURAL NETWORK — 812

FIG. 8

900

OBTAIN TRAINING DATA FOR
DISTILLED NEURAL NETWORK — 902

PROCESS EXAMPLE NETWORK INPUTS USING
DISTILLED NEURAL NETWORK — 904

EVALUATE DISTILLATION OBJECTIVE FUNCTION
BASED ON TARGET NETWORK OUTPUTS — 906

UPDATE DISTILLED NEURAL NETWORK TO
OPTIMIZE DISTILLATION OBJECTIVE FUNCTION — 908

NO ◁ DISTILLATION COMPLETE? — 910

YES

PROVIDE TRAINED
DISTILLED NEURAL NETWORK — 912

FIG. 9

**EUROPEAN SEARCH REPORT**

Application Number

EP 25 19 7145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAO HAO ET AL: "LMDrive: Closed-Loop End-to-End Driving with Large Language Models", 2024 IEEE/CVF CONFERENCE ON COMPUTER VISION AND PATTERN RECOGNITION (CVPR), IEEE, 16 June 2024 (2024-06-16), pages 15120-15130, XP034696261, DOI: 10.1109/CVPR52733.2024.01432 [retrieved on 2024-09-16] * abstract; figures 1,4-6 * * Sections 4, 4.1, 4.2, 4.3 * ----- | 1-15 | INV. G06V10/82 G06V20/56 |
| X | MU XIANGRU ET AL: "Pix2Planning: End-to-End Planning by Vision-language Model for Autonomous Driving on Carla Simulator", 2024 IEEE INTELLIGENT VEHICLES SYMPOSIUM (IV), IEEE, 2 June 2024 (2024-06-02), pages 2383-2390, XP034641270, DOI: 10.1109/IV55156.2024.10588479 [retrieved on 2024-07-15] | 1,2,6, 10-15 | |
| A | * Section III; figures 2-6 * ----- | 3-5,7-9 | TECHNICAL FIELDS SEARCHED (IPC) G06V |
| A | SHIHAO WANG ET AL: "OmniDrive: A Holistic LLM-Agent Framework for Autonomous Driving with 3D Perception, Reasoning and Planning", ARXIV.ORG, CORNELL UNIVERSITY LIBRARY, 201 OLIN LIBRARY CORNELL UNIVERSITY ITHACA, NY 14853, 2 May 2024 (2024-05-02), XP091745272, * Section 2; figure 2; table 1 * ----- -/-- | 1-15 | |

The present search report has been drawn up for all claims

| Place of search | Date of completion of the search | Examiner |
|---|---|---|
| The Hague | 17 October 2025 | Meurisse, Wim |

page 1 of 2

Europäisches
Patentamt

European
Patent Office

Office européen
des brevets

# EUROPEAN SEARCH REPORT

**Application Number**

EP 25 19 7145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 276 693 A1 (DEEPMIND TECH LTD [GB]) 15 November 2023 (2023-11-15) * paragraphs [0074] - [0082]; figures 1A,1B * | 1-15 | |
| | ----- | | |
| | | | **TECHNICAL FIELDS SEARCHED (IPC)** |

The present search report has been drawn up for all claims

| Place of search | Date of completion of the search | Examiner |
|---|---|---|
| The Hague | 17 October 2025 | Meurisse, Wim |

EPO FORM 1503 03.82 (P04C01)

## ANNEX TO THE EUROPEAN SEARCH REPORT
## ON EUROPEAN PATENT APPLICATION NO.

EP 25 19 7145

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2025

| Patent document cited in search report | | Publication date | Patent family member(s) | | Publication date |
|---|---|---|---|---|---|
| EP 4276693 | A1 | 15-11-2023 | CN | 118843869 A | 25-10-2024 |
| | | | EP | 4276693 A1 | 15-11-2023 |
| | | | US | 2023365146 A1 | 16-11-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OORD et al.** *Representation Learning with Contrastive Predictive Coding*
- **RADFORD et al.** *Learning Transferable Visual Models from Natural Language Supervision*
- **YU et al.** *CoCa: Contrastive Captioners are Image-Text Foundation Models*